# EUROPEAN PATENT APPLICATION

(11) **EP 4 775 739 A1**
(43) Date of publication of application: **15.07.2026**
(21) Application number: 24879547.8
(22) Date of filing: 30.09.2024
(51) Int. Cl.: E02F 3/84, B60K 1/04, B60L 50/70, E02F 9/00, E02F 9/18, H01M 8/04, H01M 8/04313, H01M 8/04694

(54) **CONSTRUCTION MACHINE**

(30) Priority: 20.10.2023 JP 2023181366; 20.05.2024 JP 2024082106
(71) Applicant: KOBELCO CONSTRUCTION MACHINERY CO., LTD., Hiroshima-shi, Hiroshima 731-5161 (JP)
(72) Inventor: KAMADA, Masashi, Hiroshima-shi, Hiroshima 731-5161 (JP); TERAUCHI, Kenichi, Hiroshima-shi, Hiroshima 731-5161 (JP); OKA, Hidekazu, Hiroshima-shi, Hiroshima 731-5161 (JP)
(74) Representative: TBK
(86) International application number: PCT/JP2024/034976
(87) International publication number: WO 2025/084121

(57) **Abstract**

A construction machine (100) includes a fuel cell device (42) having a device drain port (43), and a drain pipe (30) connected to the device drain port (43). The drain pipe (30) is disposed at a position lower than or equal to a height of the device drain port (43).

## Description

### Technical Field

The present disclosure relates to a construction machine such as a hydraulic excavator.

### Background Art

A construction machine described in Patent Literature 1 includes a main body unit revolvable by revolving part of a revolving part, a work device connected to one end side of the main body unit, a hydrogen tank that is provided inside another end side of the main body unit and stores hydrogen, and a fuel cell provided inside the main body unit and to which the hydrogen from the hydrogen tank is supplied. This fuel cell can generate electricity (electric power) by a chemical reaction of hydrogen and oxygen.

In a construction machine including an engine as a power source, high-temperature exhaust gas discharged from the engine is generally discharged from an upper portion of a machine body such as an upper slewing body. However, when such a discharge structure is applied to a construction machine including a fuel cell device as a power source, the following problem occurs. That is, since water (water vapor) is generated by a chemical reaction in the fuel cell device, it is necessary to discharge the water discharged from the fuel cell device to the outside of the construction machine. However, when the drain pipe for discharging the water to the outside of the construction machine is disposed upward from the fuel cell device toward the upper part of the machine body, the water tends to be retained in the drain pipe.

### Citation List

### Patent Literature

Patent Literature 1: WO 2022/137688 A

### Summary of Invention

An object of the present disclosure is to provide a construction machine capable of preventing water from remaining in a drain pipe for discharging water discharged from a fuel cell device to the outside of the construction machine.

A construction machine according to a first aspect includes: a fuel cell device having a device drain port; and a drain pipe connected to the device drain port, in which the drain pipe is disposed at a position lower than or equal to a height of the device drain port.

### Brief Description of Drawings

FIG. 1 is a side view illustrating a construction machine according to an embodiment.
FIG. 2 is a view illustrating the inside of a machine chamber of the construction machine, and is a cross-sectional view taken along line II-II in FIG. 1.
FIG. 3 is a perspective view illustrating a machine body frame and a fuel cell device.
FIG. 4 is an enlarged perspective view of a portion surrounded by an alternate long and short dash line in FIG. 3.
FIG. 5 is a right side view of the portion illustrated in FIG. 4 as viewed from a direction indicated by an arrow V.
FIG. 6 is a perspective view illustrating a drain receiver included in a construction machine according to a first modification of the embodiment.
FIG. 7 is a cross-sectional view illustrating the drain receiver in the first modification.
FIG. 8 is a perspective view illustrating a state in which the drain receiver is supported by the machine body frame in a construction machine according to the first modification, and is a view of a rear portion of an upper slewing body as viewed obliquely from below.
FIG. 9 is a side view illustrating a state in which the drain receiver is supported by the machine body frame in the construction machine according to the first modification.
FIG. 10 is a rear view illustrating a state in which the drain receiver is supported by the machine body frame in the construction machine according to the first modification.
FIG. 11 is a perspective view illustrating a drain receiver included in a construction machine according to a second modification of the embodiment.
FIG. 12 is a perspective view illustrating the drain receiver in the second modification, and is a view illustrating a state in which an upper wall of the drain receiver is removed.
FIG. 13 is a perspective view illustrating a state in which the drain receiver is supported by a machine body frame in the construction machine according to the second modification, and is a view of a rear portion of the upper slewing body as viewed obliquely from below.
FIG. 14 is a side view illustrating a state in which the drain receiver is supported by the machine body frame in the construction machine according to the second modification.
FIG. 15 is a rear view illustrating a state in which the drain receiver is supported by the machine body frame in the construction machine according to the second modification.
FIG. 16 is a perspective view illustrating a drain receiver included in a construction machine according to a third modification of the embodiment.
FIG. 17 is a perspective view illustrating the drain receiver in the third modification, and is a view illustrating a state in which an upper wall of the drain receiver is removed.
FIG. 18 is a perspective view illustrating a state in which the drain receiver is supported by a machine body frame in the construction machine according to the third modification, and is a view of a rear portion of the upper slewing body as viewed obliquely from below.
FIG. 19 is a side view illustrating a state in which the drain receiver is supported by the machine body frame in the construction machine according to the third modification.
FIG. 20 is a rear view illustrating a state in which the drain receiver is supported by the machine body frame in the construction machine according to the third modification.
FIG. 21 is a perspective view illustrating a drain pipe in the third modification.
FIG. 22 is a perspective view illustrating a state in which the drain receiver and the duct are supported by the machine body frame in the construction machine according to a fourth modification of the embodiment, and is a view of a rear portion of the upper slewing body as viewed obliquely from below.
FIG. 23 is a side view illustrating a state in which the drain receiver is supported by the machine body frame in the construction machine according to a fifth modification of the embodiment.
FIG. 24 is a side view illustrating a state in which the drain receiver is disposed in the machine chamber in the construction machine according to a sixth modification of the embodiment.
FIG. 25 is a side view illustrating a main part of a construction machine according to still another modification of the embodiment.
FIG. 26 is a perspective view illustrating a lower travelling body and a swivel joint of the construction machine of FIG. 25.
FIG. 27 is a side view illustrating a main part of a construction machine according to still another modification of the embodiment.
FIG. 28 is a rear view illustrating a main part of a construction machine according to still another modification of the embodiment.
FIG. 29 is a side view illustrating a main part of the construction machine of FIG. 28.
FIG. 30 is a rear view illustrating a construction machine according to still another modification of the embodiment.
FIG. 31 is a rear view illustrating a construction machine according to still another modification of the embodiment.
FIG. 32 is a plan view illustrating a construction machine according to still another modification of the embodiment.
FIG. 33 is a plan view illustrating a construction machine according to still another modification of the embodiment.
FIG. 34 is a side view illustrating a construction machine according to still another modification of the embodiment.

### Description of Embodiments

An embodiment of the present disclosure will be described with reference to the drawings.

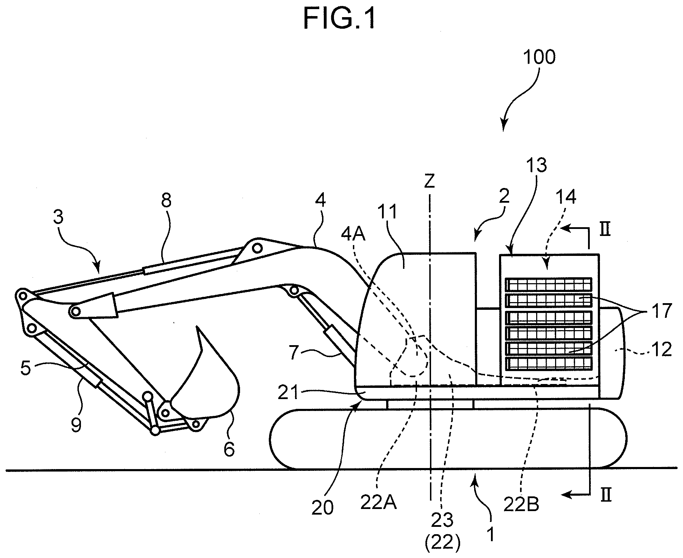

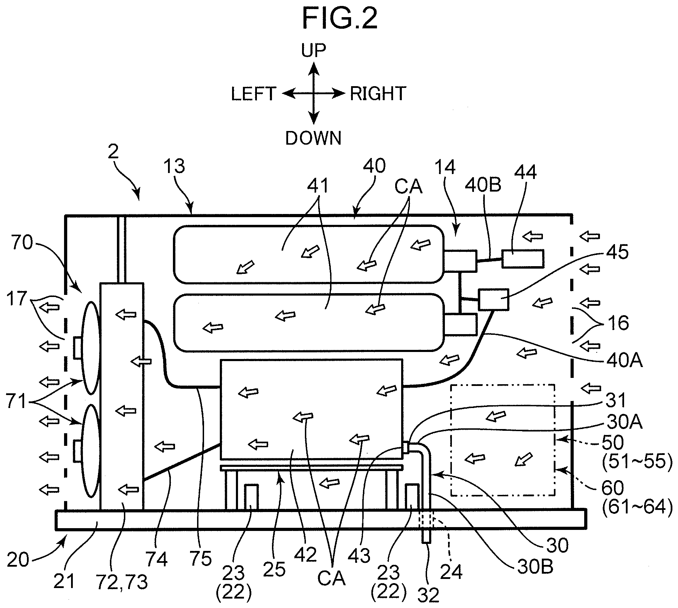

As illustrated in FIGS. 1 and 2, a construction machine 100 includes a lower travelling body 1 including a travelling device, an upper slewing body 2 supported by the lower travelling body 1 so as to be swingable with respect to the lower travelling body 1 about a slewing axis Z extending vertically, and a work device 3 supported by the upper slewing body 2. Although the construction machine 100 according to the above embodiment is a hydraulic excavator, the construction machine in the present disclosure is not limited to a hydraulic excavator, and may be another construction machine such as a crane or a bulldozer. The travelling device may be a crawler travelling device illustrated in FIG. 1, or may be a travelling device having a tire (not illustrated). A crawler travelling device includes a crawler frame extending in one direction, two wheels rotatably supported by one end portion and the other end portion of the crawler frame, respectively, and a crawler belt annularly (endlessly) supported by the two wheels. The crawler belt includes a number of shoes that are coupled.

Each of the front-rear direction and the left-right direction illustrated in the drawing is a direction based on the direction of the upper slewing body 2. Specifically, the front-rear direction is a horizontal direction parallel to the longitudinal direction of the work device 3 in plan view, and the left-right direction is a horizontal direction orthogonal to the front-rear direction.

The work device 3 includes a boom 4 attached to the upper slewing body 2 so as to be raised and lowered, an arm 5 swingably attached to the boom 4, and a distal end attachment 6 swingably attached to the arm 5. Although the distal end attachment 6 in the present embodiment is a bucket, the distal end attachment may be, for example, another distal end attachment such as a grapple, a fork, or a crusher.

The upper slewing body 2 includes a machine body frame 20, a cab 11 supported by the machine body frame 20, a counterweight 12, and an outer wall 13. The outer wall 13 has, for example, a box shape and defines a machine chamber 14. Various devices are accommodated in the machine chamber 14. Various devices accommodated in the machine chamber 14 will be described later. The upper slewing body 2 is one example of a machine body.

The machine body frame 20 is a member swingably supported on the lower travelling body 1. The machine body frame 20 includes a frame body 21 and a standing body 22. The frame body 21 supports the cab 11 and the outer wall 13. The frame body 21 has upper surfaces extending in front, rear, left, and right directions of a size capable of supporting the cab 11 and the outer wall 13. The standing body 22 supports the boom 4 such that the boom 4 can be raised and lowered. The standing body 22 includes a boom attachment portion 22A to which a base end portion 4A of the boom 4 indicated by a broken line in FIG. 1 is attached. The boom attachment portion 22A constitutes a front portion of the standing body 22.

The cab 11 is disposed, for example, at a left front portion of the frame body 21. The counterweight 12 is a weight for balancing and is disposed at the rear portion of the frame body 21 or behind the frame body 21. A driver's seat, an operation lever, an operation pedal, and the like are disposed in the cab 11.

The standing body 22 has a shape that stands upright from the frame body 21 and extends in the front-rear direction as indicated by a broken line in FIG. 1. The standing body 22 includes a rear portion 22B positioned behind the boom attachment portion 22A (front portion). The rear portion 22B is positioned behind the boom attachment portion 22A and is lower in height than the boom attachment portion 22A.

In the present embodiment, as illustrated in FIGS. 1, 2, and 3, the standing body 22 includes left and right standing plates 23 and 23 facing each other with an interval therebetween in the left-right direction. Each of the left and right standing plates 23 and 23 is a plate-like member that stands upright from the frame body 21, and is disposed so as to extend in the front-rear direction.

The construction machine 100 includes a plurality of actuators. Each of the plurality of actuators operates by receiving supply of hydraulic oil from a hydraulic pump 62 described later. The plurality of actuators include a boom cylinder 7 for raising and lowering the boom 4, an arm cylinder 8 for rotating the arm 5, a distal end attachment cylinder 9 for rotating the distal end attachment 6, and a hydraulic motor 64 for slewing the upper slewing body 2 with respect to the lower travelling body 1.

The machine chamber 14 houses a plurality of device groups to be described later. The machine chamber 14 is formed in a space of the upper surface of the frame body 21 excluding an area in which the cab 11 is disposed, an area in which the base end portion 4A of the boom 4 is mounted, and an area in which the counterweight 12 is disposed. The machine chamber 14 may be formed, for example, in a rear space which is a space behind the cab 11, in a side space which is a space on a side (for example, a right side) of the cab 11, or in both the rear space and the side space. In a case where the weight of the device accommodated in the machine chamber 14 is large, the counterweight 12 can be omitted.

The outer wall 13 has, for example, a box shape and defines the machine chamber 14. As illustrated in FIGS. 1 and 2, an intake port 16 and an exhaust port 17 are formed in the outer wall 13. The intake port 16 is an opening through which air outside the machine chamber 14 is taken into the machine chamber 14 as cooling air CA. The exhaust port 17 is an opening for discharging the cooling air CA inside the machine chamber 14 to the outside of the machine chamber 14. A portion where each of the intake port 16 and the exhaust port 17 is formed is not particularly limited, but in the present embodiment, the intake port 16 is formed in a side portion (for example, a right side portion) of the outer wall 13, and the exhaust port 17 is formed in another side portion (for example, a left side portion) of the outer wall 13.

The construction machine 100 includes a plurality of device groups. The plurality of device groups include a hydrogen device group 40, a high-voltage device group 50, a hydraulic device group 60, and a cooling device group 70. In the specific example illustrated in FIG. 2, the hydrogen device group 40 is disposed in an area near the center of the rear portion of the upper slewing body 2, the cooling device group 70 is disposed in an area near the left side of the rear portion of the upper slewing body 2, and the high-voltage device group 50 and the hydraulic device group 60 are disposed in areas other than these areas. However, the area where each device group is disposed is not limited to the specific example illustrated in FIG. 2.

The hydrogen device group 40 includes a hydrogen tank 41, a fuel cell device 42, and a hydrogen filling port 44. The hydrogen tank 41 is connected to the fuel cell device 42 via a fuel pipe 40A. The hydrogen filling port 44 is connected to the hydrogen tank 41 via a hydrogen filling pipe 40B.

The hydrogen tank 41 is a container for storing hydrogen. In the present embodiment, the hydrogen tank 41 is disposed above the fuel cell device 42. The hydrogen tank 41 may be supported by a tank support member (not illustrated) in the machine chamber 14. A decompression valve 45 may be disposed in the fuel pipe 40A. In this case, the high-pressure hydrogen stored in the hydrogen tank 41 is decompressed by the decompression valve 45. The depressurized hydrogen is supplied to the fuel cell device 42 through the fuel pipe 40A.

The fuel cell device 42 includes a fuel cell 42A. The fuel cell 42A generates electricity (electric power) by electrochemically reacting hydrogen supplied from hydrogen tank 41 with oxygen (for example, oxygen contained in air). The fuel cell 42A may include, for example, a fuel cell stack including a plurality of cells.

The hydrogen filling port 44 has a filling port communicating with the hydrogen filling pipe 40B. In the filling operation of filling the hydrogen tank 41 with hydrogen, the hydrogen tank 41 is filled with hydrogen by connecting a nozzle of a hydrogen gas filling device (not illustrated) to the hydrogen filling port 44. When the filling of the hydrogen tank 41 with hydrogen is completed, the nozzle of the hydrogen gas filling device is removed from the hydrogen filling port 44.

The high-voltage device group 50 includes an inverter 51 and an electric motor 52. The inverter 51 is connected to the fuel cell device 42 by a cable (not illustrated). The inverter 51 is connected to the electric motor 52 by a cable (not illustrated).

The inverter 51 converts a direct current supplied from the fuel cell device 42 into a three-phase alternating current and supplies the three-phase alternating current to the electric motor 52. The inverter 51 adjusts the rotation speed of the electric motor 52.

The electric motor 52 is a drive source that drives the hydraulic pump 62. The electric motor 52 operates by receiving power supplied from the fuel cell device 42 via the inverter 51. The electric motor 52 is configured by, for example, a three-phase motor.

The high-voltage device group 50 may further include a battery 53. The battery 53 may be, for example, a lithium ion battery, or may be another type of battery. The electric motor 52 may operate by receiving supply of electric power output from the battery 53 via the inverter 51. The inverter 51 may convert a direct current supplied from the battery 53 into a three-phase alternating current and supply the three-phase alternating current to the electric motor 52. In addition, the battery 53 may be charged by receiving power supply from the fuel cell device 42.

The high-voltage device group 50 may further include a repeater 55 (junction box). The repeater 55 has a function of merging power output from the fuel cell device 42 and power output from the battery 53, and a function of distributing power to a plurality of high-voltage devices such as the inverter 51 and the converter 54 described later.

The high-voltage device group 50 may further include the converter 54 (DC-DC converter). The converter 54 steps down the high-voltage output from the repeater 55. The converter 54 supplies the stepped-down low-voltage power to a low-voltage device group.

The hydraulic device group 60 includes a hydraulic oil tank 61, a hydraulic pump 62, a control valve 63, and a hydraulic motor 64. The hydraulic oil tank 61 is a container that stores hydraulic oil. The hydraulic pump 62 is driven by the electric motor 52 to discharge hydraulic oil. The hydraulic pump 62 is connected to the electric motor 52 via an axial connection coupling (not illustrated). The hydraulic motor 64 operates by receiving supply of hydraulic oil from the hydraulic pump 62 via the control valve 63. The control valve 63 is opened and closed such that hydraulic oil from the hydraulic pump 62 is supplied to an actuator corresponding to a lever operation or a pedal operation given to an operation device (not illustrated) by an operator.

The cooling device group 70 includes a cooling fan 71 and a heat exchanger. The heat exchanger may include at least one of an oil cooler 72 and a radiator 73.

The cooling fan 71 forms a flow of the cooling air CA in the machine chamber 14. That is, the cooling fan 71 forms a flow of the cooling air CA from the intake port 16 to the exhaust port 17 in the machine chamber 14. The cooling fan 71 includes an impeller including a rotary shaft and a plurality of blades arranged along an outer periphery of the rotary shaft, and a fan motor that drives the impeller. The impeller of the cooling fan 71 rotates, for example, when electric power is supplied from the fuel cell device 42 or the battery 53 to the fan motor via the repeater 55. The cooling fan 71 may further include a shroud disposed to surround the impeller.

The oil cooler 72 may be configured to cool the hydraulic oil discharged from a device included in the hydraulic device group 60. The hydraulic oil discharged from the control valve 63 reaches the oil cooler 72 via the oil cooler hose (not illustrated), is cooled by heat exchange with the cooling air CA in the oil cooler 72, and then returns to the hydraulic oil tank 61 via the oil cooler hose (not illustrated). As a result, the hydraulic oil is cooled.

The radiator 73 may be configured to cool the fuel cell device 42. Specifically, for example, the radiator 73 may be connected to the fuel cell device 42 via radiator hoses 74 and 75. The cooling water circulates between the fuel cell device 42 and the radiator 73 by the water pump. The cooling water is cooled by heat exchange with the cooling air CA in the radiator 73, and is supplied to the fuel cell device 42 via the radiator hose 74, whereby the fuel cell device 42 is cooled by the cooling water. The cooling water having passed through the fuel cell device 42 returns to the radiator 73 via the radiator hose 75.

The plurality of device groups may further include the low-voltage device group. The low-voltage device group may include, for example, the water pump and the controller 90. The water pump circulates cooling water between the fuel cell device 42 and a radiator 73 through radiator hoses 74 and 75.

The controller 90 controls the operation of the construction machine 100. The controller 90 includes a computer including an arithmetic processing device and a memory. The controller 90 is configured to control the operation of the construction machine 100 by causing the arithmetic processing device to execute a program stored in the memory.

Next, features of the construction machine 100 according to the present embodiment illustrated in FIGS. 1 to 5 will be described.

### [First Feature]

The construction machine 100 according to the present embodiment has the following first feature. That is, the fuel cell device 42 includes a device drain port 43, the construction machine 100 includes a drain pipe 30 connected to the device drain port 43, and the drain pipe 30 is disposed at a position lower than or equal to the height of the device drain port 43. In the construction machine 100 having the first feature, for example, water discharged from the fuel cell device 42 is less likely to remain in the drain pipe 30 as compared with a case where the drain pipe 30 is disposed upward toward the upper part of the upper slewing body 2 (machine body).

Since water is less likely to remain in the drain pipe 30, freezing of water in the drain pipe 30 under a low temperature environment of, for example, 0°C or lower can be suppressed. Further, water is less likely to remain in the drain pipe 30, so that water is less likely to remain in the fuel cell device 42. Since water is less likely to remain in the fuel cell device 42, it is possible to suppress inhibition of the reaction between hydrogen and oxygen in the fuel cell.

The drain pipe 30 has a pipe inlet 31 connected to the device drain port 43, and the drain pipe 30 is positioned at a height lower than or equal to a height of the pipe inlet 31. The drain pipe 30 may be disposed such that the entire drain pipe 30 has the same height as the device drain port 43. However, it is preferable that the drain pipe 30 is disposed such that the pipe inlet 31 and a base end portion which is a portion in the vicinity of the pipe inlet 31 have the same height as the device drain port 43, and a portion other than the pipe inlet 31 and the base end portion is lower than the device drain port 43.

The fuel cell device 42 may include a case 42B that houses the fuel cell 42A, and in this situation, the device drain port 43 may be formed in the case 42B. In the present embodiment, the device drain port 43 is formed on the side surface of the case 42B, but the position where the device drain port 43 is formed is not limited to the side surface of the case 42B, and may be, for example, the bottom surface of the case 42B or the upper surface of the case 42B. More specifically, the device drain port 43 is formed in a lower part of the side surface of the case 42B.

In the fuel cell device 42, water (water vapor) is generated by a chemical reaction, and the generated water is discharged from the device drain port 43. The water discharged from the device drain port 43 of the fuel cell device 42 may contain both liquid water and gaseous water (water vapor), or may contain only one of liquid water and gaseous water (water vapor). Water vapor discharged from the device drain port 43 may become dew condensation water in the drain pipe 30.

### [Second Feature]

The construction machine 100 according to the present embodiment further includes the following second feature. That is, in the construction machine 100, the drain pipe 30 has a pipe drain port 32, and the pipe drain port 32 is positioned below the device drain port 43. In this case, since the water in the drain pipe 30 is more easily discharged from the pipe drain port 32, the water is less likely to remain in the drain pipe 30.

It is preferable that the drain pipe 30 has such a shape that water in the drain pipe 30 is urged to flow toward the pipe drain port 32 by its own weight. The drain pipe 30 in the present embodiment is configured to have the same height as the device drain port 43 or a height lower than the device drain port 43 over the entire drain pipe 30 without having a portion (a portion extending upward parallel to the vertical direction and a portion extending obliquely upward) extending upward from the pipe inlet 31 which is an upstream end of the drain pipe 30 connected to the device drain port 43 toward the pipe drain port 32 which is a downstream end from which water in the drain pipe 30 is discharged. In other words, when a direction in which water flows from the pipe inlet 31 toward the pipe drain port 32 is referred to as a water flow direction, the drain pipe 30 does not have a portion extending upward (a portion extending upward parallel to the vertical direction and a portion extending obliquely upward) in the water flow direction.

When the device drain port 43 is formed on a side surface of the fuel cell device 42 (a side surface of the case 42B) as in the present exemplary embodiment, the drain pipe 30 may include a lateral portion 30A (upstream lateral portion 30A) which is a portion extending laterally from the device drain port 43, and a downward portion 30B extending downward from the lateral portion 30A. In this case, the pipe drain port 32 may be formed in the downward portion 30B. Although not illustrated, when the device drain port 43 is formed in the bottom surface of the fuel cell device 42 (the bottom surface of the case 42B), the drain pipe 30 may include a downward portion extending downward from the device drain port 43, and in this case, the lateral portion can be omitted.

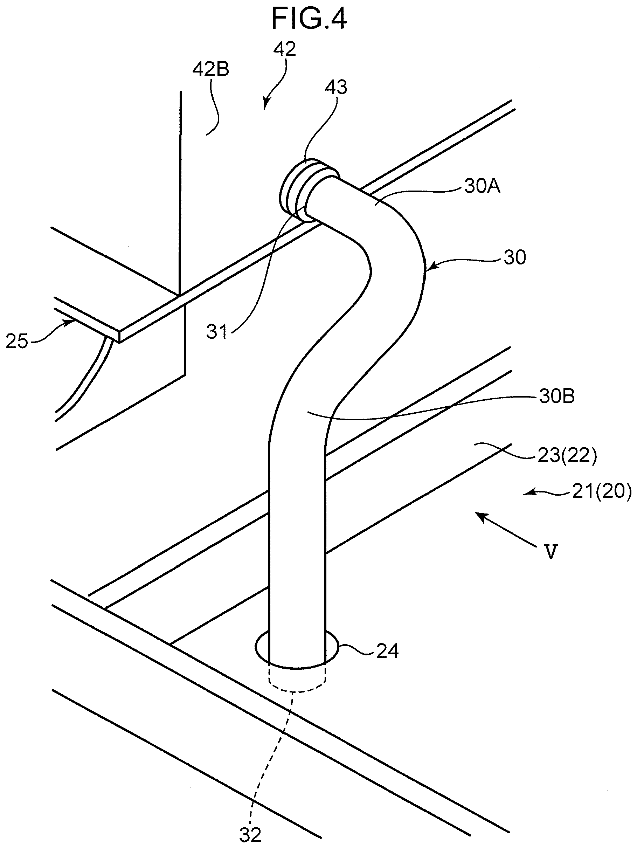

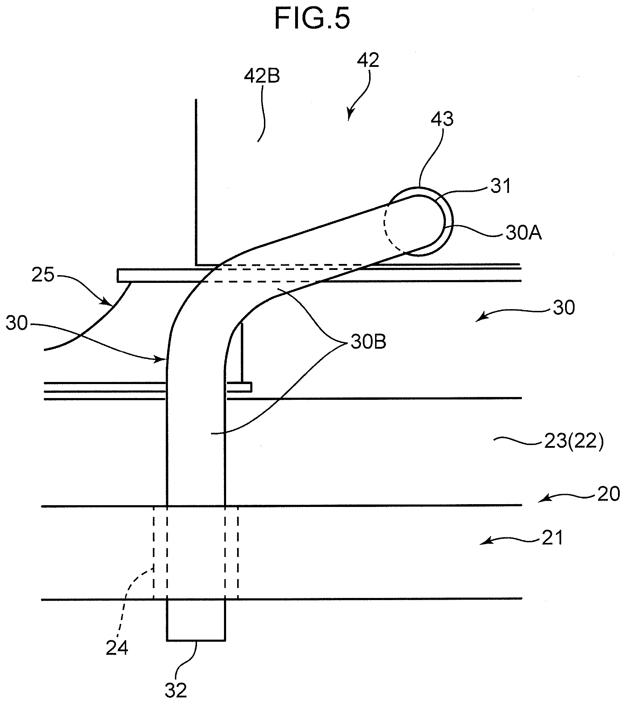

In the present embodiment, "downward" may be a downward direction parallel to the vertical direction, or may be a downward direction inclined with respect to the vertical direction (obliquely downward). That is, the downward portion 30B of the drain pipe 30 may include at least one of a portion extending downward parallel to the vertical direction and a portion extending obliquely downward. In addition, the downward portion 30B may include at least one of a linear portion extending downward and a curved portion extending downward. In the specific example illustrated in FIGS. 4 and 5, the downward portion 30B includes a portion extending obliquely downward from the lateral portion 30A and a portion extending downward parallel to the vertical direction from the portion, but the shape of the drain pipe 30 is not limited to the specific example illustrated in FIGS. 4 and 5.

### [Third Feature]

The construction machine 100 according to the present embodiment further includes the following third feature. That is, in the construction machine 100, the pipe drain port 32 is formed at the lowermost portion of the drain pipe 30. In this case, the water in the drain pipe 30 flows toward the lowermost portion of the drain pipe 30 and is smoothly discharged from the pipe drain port 32 formed at the lowermost portion.

### [Fourth Feature]

The construction machine 100 according to the present embodiment further includes the following fourth feature. That is, in the construction machine 100, the drain pipe 30 extends toward an opening 24 formed in the machine body frame 20 (specifically, the frame body 21), and the pipe drain port 32 is disposed in the opening 24 or disposed below the opening 24. In this case, the water in the drain pipe 30 can be discharged below the machine body frame 20 through the pipe drain port 32 disposed in the opening 24 or the pipe drain port 32 disposed below the opening 24. Accordingly, water is not discharged from the drain pipe 30 into the machine chamber 14 of the upper slewing body 2.

The drain pipe 30 may be inserted into the opening 24 formed in the machine body frame 20, and the pipe drain port 32 may be positioned below the opening 24.

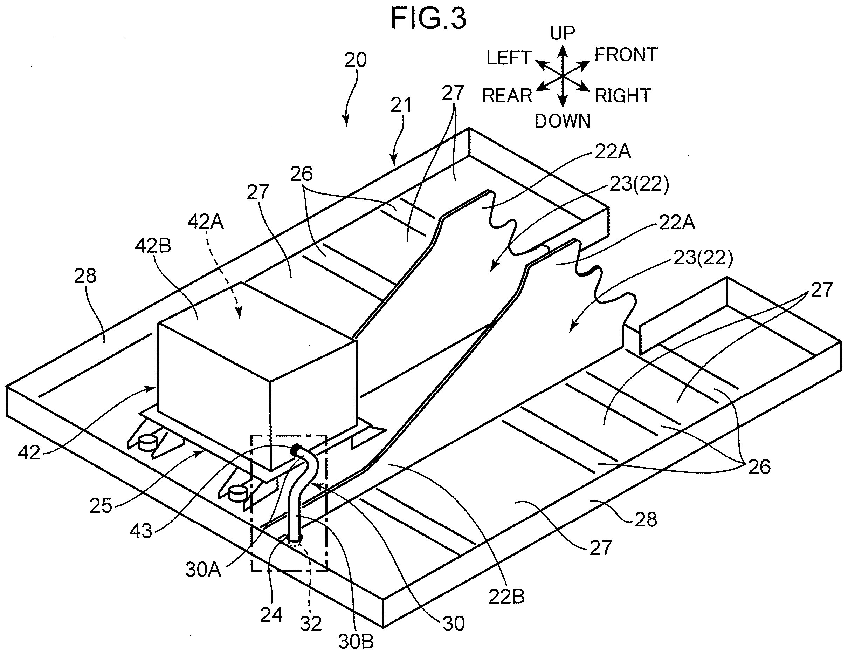

The frame body 21 of the machine body frame 20 is positioned below the fuel cell device 42. The fuel cell device 42 is supported by the machine body frame 20 by being disposed on the frame body 21 of the machine body frame 20. In the specific example illustrated in FIGS. 3 to 5, the machine body frame 20 has a device support member 25 fixed on the frame body 21, and the fuel cell device 42 is supported by the device support member 25. The device support member 25 may include a plurality of legs (for example, four legs) and a top plate supported by the plurality of legs, and in this case, the fuel cell device 42 may be disposed on the top plate. Each of the plurality of legs may include a mount for suppressing transmission of vibration to the fuel cell device 42.

### [Fifth Feature]

The construction machine 100 according to the present embodiment further includes the following fifth feature. That is, in the construction machine 100, the machine body frame 20 includes at least one structural member and at least one non-structural member. The opening 24 of the machine body frame 20 may be formed in the non-structural member or may be formed between the structural member and the non-structural member. In this case, the water in the drain pipe 30 can be discharged from the pipe drain port 32 below the machine body frame 20 without forming an opening in the structural member of the machine body frame 20.

The structural member is a member that resists a load and imparts rigidity and strength to the machine body frame 20 among a plurality of members constituting the machine body frame 20, and may be, for example, a member such as a beam or a column. The non-structural member is a member having a lower contribution to imparting rigidity and strength to the machine body frame 20 than the structural member. The at least one structural member may include, for example, a plurality of beams. The plurality of beams may include, for example, one or more longitudinal beams extending in the front-rear direction. The plurality of longitudinal beams may include a right longitudinal beam 28 disposed at the right end of the machine body frame 20 and a left longitudinal beam 28 disposed at the left end of the machine body frame 20, and may include standing plates 23 and 23 extending in the front-rear direction. The plurality of beams may include one or a plurality of lateral beams 26 extending in the left-right direction. The at least one non-structural member may include, for example, a plurality of plate-like members 27. For example, each of the plurality of plate-like members 27 may be disposed so as to straddle between the adjacent lateral beams 26 and 26.

The opening 24 of the machine body frame 20 is a region that vertically penetrates the machine body frame 20. The opening 24 may be a through hole formed in the plate-like member 27, may be a gap formed between the lateral beam 26 and the plate-like member 27, or may be a gap formed between the standing plate 23 and the plate-like member 27. The opening 24 may be a gap formed between two structural members or a gap formed between two non-structural members.

### [Sixth Feature]

The construction machine 100 according to the present embodiment further includes the following sixth feature. That is, in the construction machine 100, the drain pipe 30 has a downward portion 30B which is a portion extending downward at a position avoiding the structural member. In this case, while satisfying the restriction condition that the opening is not formed in the structural member of the machine body frame 20 and suppressing the increase in the length of the drain pipe 30, the pipe drain port 32 can be disposed in the opening 24 formed in the machine body frame 20, or the drain pipe 30 can be inserted into the opening 24 to position the pipe drain port 32 below the opening 24. As a result, it is possible to reduce the pressure loss in the drain pipe 30, and it is difficult to reduce the drainage efficiency in the drain pipe 30. The pipe drain port 32 may be formed at a lower end of the downward portion 30B. In addition, it is preferable that the downward portion 30B of the drain pipe 30 is disposed so as to extend downward at a position adjacent to the structural member. As a result, the drain pipe 30 can be routed in the shortest route while satisfying the restriction condition.

In the present embodiment, as illustrated in FIGS. 2 and 3, the fuel cell device 42 is disposed at a position overlapping at least a part of the standing body 22 in plan view. Specifically, the fuel cell device 42 is disposed directly above the rear portion 22B of the standing body 22. The pipe inlet 31 of the drain pipe 30 is connected to the device drain port 43 formed on a side surface of the fuel cell device 42. The downward portion 30B of the drain pipe 30 extends downward at a position avoiding one standing plate 23 (right standing plate 23) and at a position adjacent to a side surface (right side surface) of the standing plate 23, and is inserted into the opening 24 formed at a position adjacent to the standing plate 23.

### [Modifications]

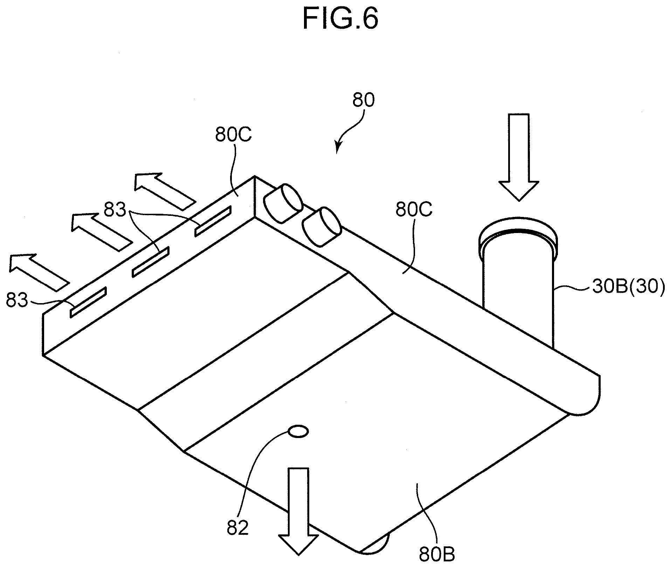

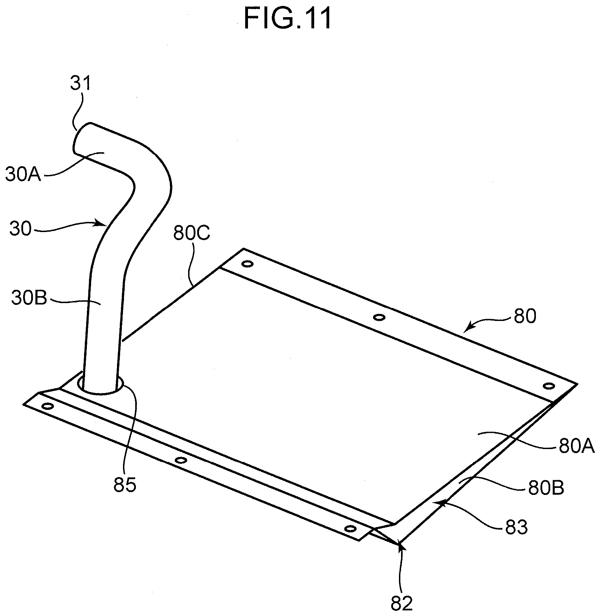

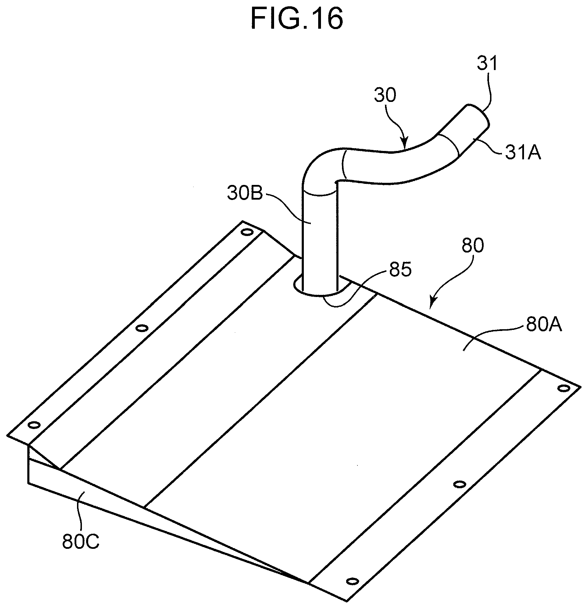

Next, features of construction machines 100 according to the first to third modifications of the present embodiment will be described with reference to FIGS. 6 to 21. Each of the construction machines 100 according to the first to third modifications has the above-described first to sixth features, and further has seventh to eleventh features described below. FIGS. 6 to 10 are views for explaining the features of the construction machine 100 according to the first modification, FIGS. 11 to 15 are views for explaining the features of the construction machine 100 according to the second modification, and FIGS. 16 to 21 are views for explaining the features of the construction machine 100 according to the third modification.

### [Seventh Feature]

Each of the construction machines 100 according to the first to third modifications further includes a drain receiver 80 that receives water guided by the drain pipe 30. In the first to third modifications, the drain receiver 80 is disposed at a position to receive water discharged from the pipe drain port 32 of the drain pipe 30.

The drain receiver 80 has at least one of a storage function, a gas-liquid separation function, a scattering suppression function, and a protection function. The storage function is a function of storing the water discharged from the drain pipe 30 and flowing into the drain receiver 80, and the gas-liquid separation function is a function of separating the water discharged from the drain pipe 30 and flowing into the drain receiver 80 into liquid water and gaseous water (water vapor). The scattering suppression function is a function of suppressing scattering of water discharged from the pipe drain port 32 of the drain pipe 30 to the surroundings. Since it is possible to suppress scattering of water from the pipe drain port 32 to the surroundings, water is less likely to be splashed onto various members around the pipe drain port 32, for example, members such as the machine body frame 20, the slewing bearing, and the frame (car body, axle, etc.) of the lower travelling body 1. This can reduce the cost of performing rust prevention treatment or the like on the member. The protection function is a function (under cover function) of protecting the drain pipe 30 by avoiding a situation in which a stone, a rock, a metal member (for example, a steel material) or the like on the ground collides with the drain pipe 30 from below the machine body frame 20.

When the drain receiver 80 has a storage function, the drain receiver 80 may not necessarily have the receiver drain port which is the drain port of the drain receiver 80. In this case, a work person such as an operator may perform a work of taking out the water stored in the drain receiver 80 from the drain receiver 80 when the water is stored in the drain receiver 80 to some extent.

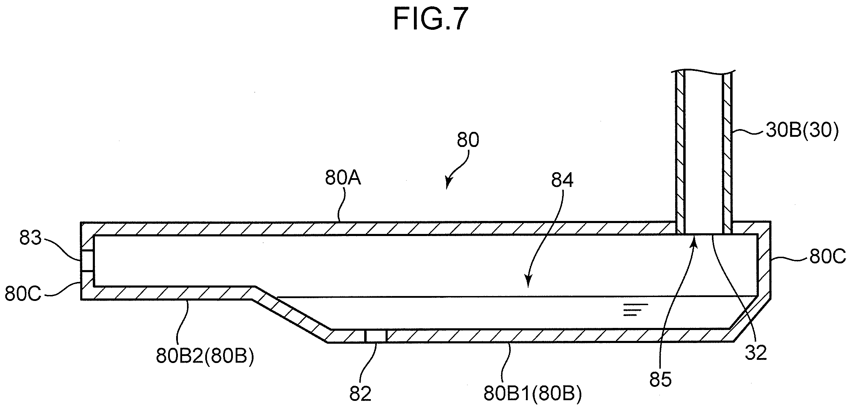

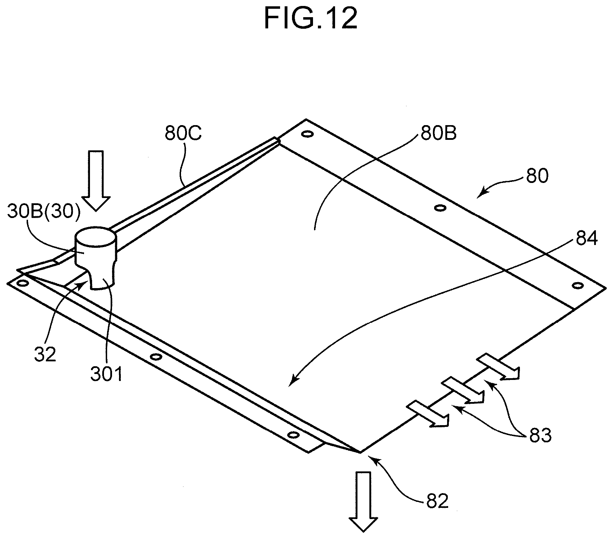

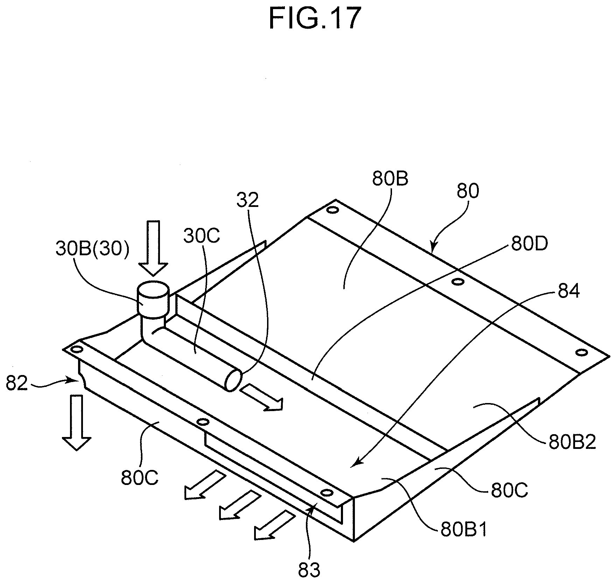

As in the first modification illustrated in FIGS. 6 and 7, the second modification illustrated in FIGS. 11 and 12, and the third modification illustrated in FIGS. 16 and 17, the drain receiver 80 may be a box-shaped container having an upper wall 80A, a lower wall 80B, and a side wall 80C. Each of the drain receivers 80 in the first to third modifications is disposed at a position capable of receiving water discharged from the pipe drain port 32 of the drain pipe 30. Accordingly, each of the drain receivers 80 has a storage function, a scattering suppression function, and a protection function.

Since the drain receiver 80 includes not only the lower wall 80B and the side wall 80C but also the upper wall 80A, it is possible to suppress water vapor in the drain receiver 80 from entering the machine chamber 14 through the opening 24.

The drain receiver 80 in the first to third modifications further includes a feature according to an eighth aspect described below.

### [Eighth Feature]

In each of the construction machines 100 according to the first to third modifications, the drain receiver 80 includes a storage portion 84 capable of storing water, and a receiver drain port 82 capable of discharging the water stored in the storage portion 84. In this case, each of the drain receivers 80 has a storage function of temporarily storing water, and also has a function of discharging a part of the water stored in the drain receiver 80 from the receiver drain port 82.

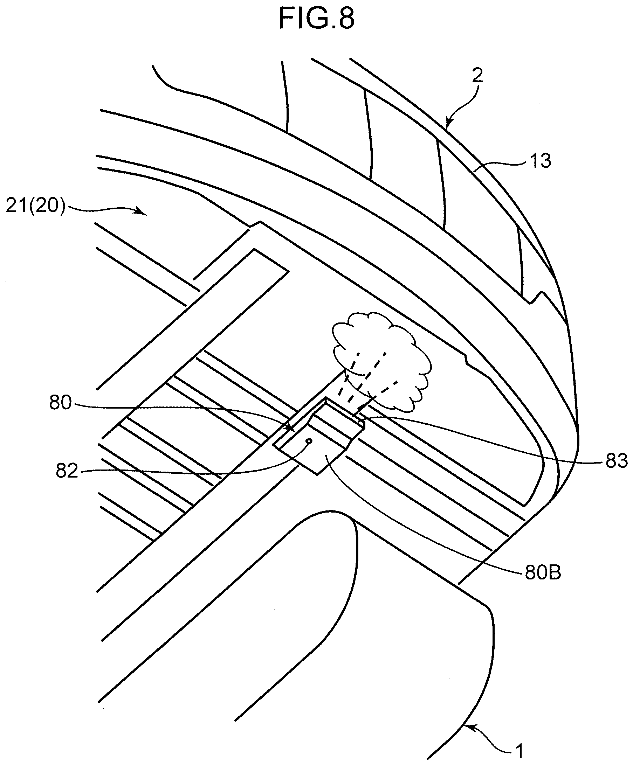

First, the first modification will be described. As illustrated in FIG. 8, the drain receiver 80 in the first modification illustrated in FIGS. 6 and 7 is attached to a lower surface of the frame body 21 of the machine body frame 20. The drain receiver 80 includes a receiver inlet 85 for receiving water from the pipe drain port 32 of the drain pipe 30 and a receiver drain port 82. The receiver inlet 85 is formed in the upper wall 80A of the drain receiver 80, and the receiver drain port 82 is formed in the lower wall 80B of the drain receiver 80.

A drain pipe 30 is connected to the receiver inlet 85. Specifically, a downward portion 30B of the drain pipe 30 is connected to a portion of the upper wall 80A of the drain receiver 80 corresponding to the receiver inlet 85.

The lower wall 80B includes a first lower wall 80B1 at a position corresponding to the storage portion 84 and a second lower wall 80B2 at a position shifted laterally with respect to the first lower wall 80B1. The first lower wall 80B1 is positioned lower than the second lower wall 80B2. As a result, the water flowing into the drain receiver 80 is stored in the storage portion 84. In the specific example illustrated in FIGS. 6 and 7, the receiver drain port 82 is formed in the first lower wall 80B1, but may be formed in the second lower wall 80B2.

In a side view as illustrated in FIG. 7, the receiver drain port 82 is formed at a position shifted in the horizontal direction with respect to the receiver inlet 85. Therefore, even when the receiver drain port 82 is formed in the first lower wall 80B1, the water flowing into the drain receiver 80 from the receiver inlet 85 is temporarily stored in the storage portion 84 at least until the water reaches the receiver drain port 82 from the receiver inlet 85. When the receiver drain port 82 is formed in the second lower wall 80B2, that is, when the receiver drain port 82 is formed at a position higher than the bottom surface of the storage portion 84, the water can be stored in the storage portion 84 until the height (water level) of the water stored in the storage portion 84 reaches the height of the receiver drain port 82.

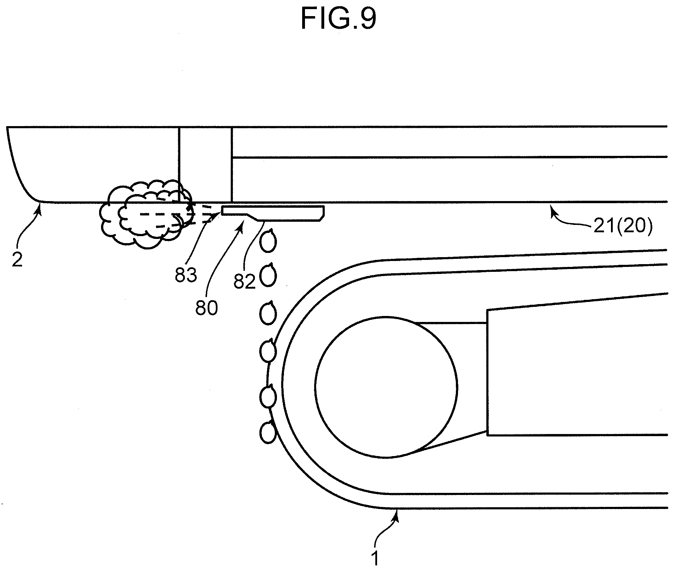

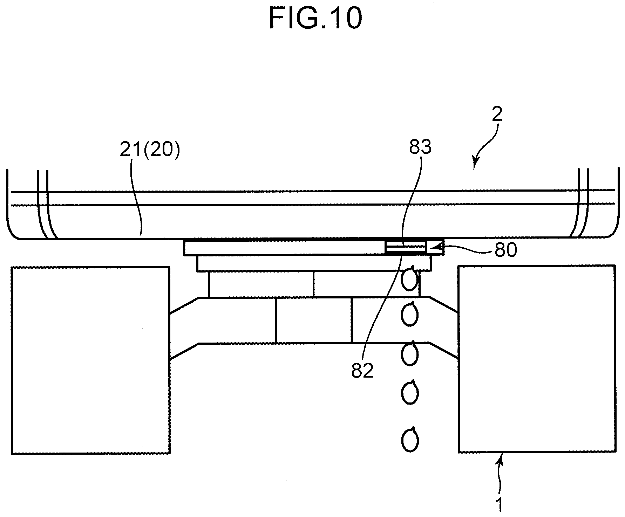

In the first modification, as illustrated in FIG. 10, when the upper slewing body 2 is disposed in such a posture that the direction in which the crawler travelling device of the lower travelling body 1 extends (the direction in which the crawler frame extends) coincides with the front-rear direction of the upper slewing body 2, the position of the receiver drain port 82 may be set so that the water discharged from the receiver drain port 82 does not splash on the lower travelling body 1 (for example, the crawler travelling device). When the upper slewing body 2 slews with respect to the lower travelling body 1, as illustrated in FIG. 9, water discharged from the receiver drain port 82 may be applied to the lower travelling body 1 (for example, the crawler travelling device).

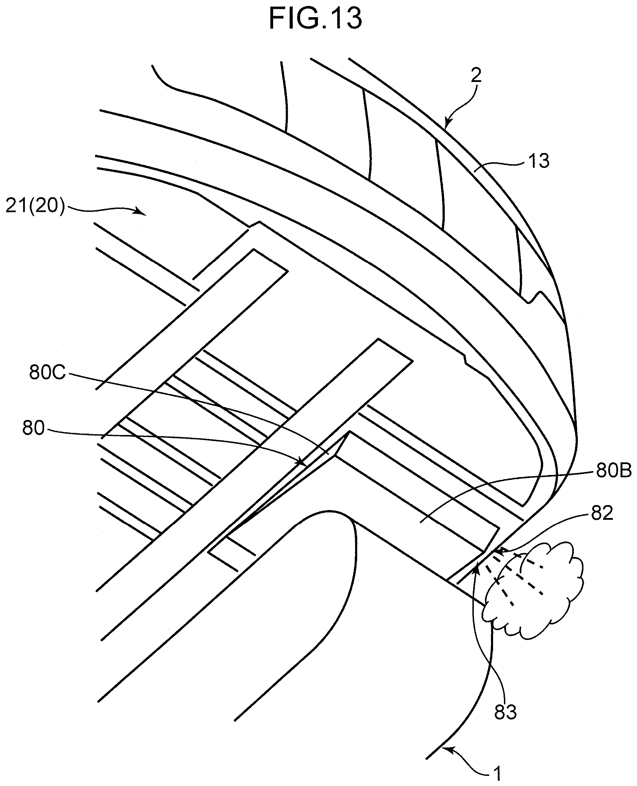

Next, a second modification will be described. As illustrated in FIG. 13, the drain receiver 80 in the second modification illustrated in FIGS. 11 and 12 is attached to a lower surface of the frame body 21 of the machine body frame 20. The drain receiver 80 includes a receiver inlet 85 for receiving water from the pipe drain port 32 of the drain pipe 30 and a receiver drain port 82. The receiver inlet 85 is formed in the upper wall 80A of the drain receiver 80.

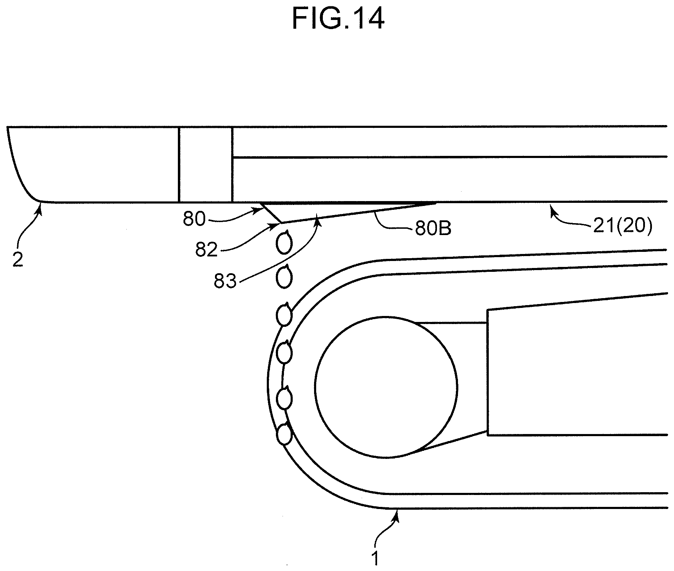

The lower wall 80B of the drain receiver 80 has a polygonal (for example, quadrangular) shape having a plurality of sides in plan view, and has no side wall in a portion corresponding to at least one side of the plurality of sides. At least a part of a region (opening) corresponding to a portion where the side wall does not exist functions as the receiver drain port 82. In the specific example illustrated in FIGS. 12 and 14, since the lower wall 80B of the drain receiver 80 is disposed in a posture inclined with respect to the horizontal plane, a portion corresponding to an end portion of the lowest portion of the lower wall 80B functions as the receiver drain port 82. The receiver drain port 82 may be configured by a through hole penetrating the lower wall 80B of the drain receiver 80.

As illustrated in FIG. 12, a lower end portion of the drain pipe 30 is close to or connected to an upper surface of the lower wall 80B of the drain receiver 80. Specifically, the lower end portion of the downward portion 30B of the drain pipe 30 is close to or connected to the upper surface of the lower wall 80B of the drain receiver 80. In the lower end portion of the downward portion 30B, a portion 301 close to the receiver drain port 82 is positioned closer to the upper surface of the lower wall 80B of the drain receiver 80 than other portions. Specifically, the portion 301 is connected to the upper surface of the lower wall 80B, and portions other than the portion 301 are separated upward from the upper surface of the lower wall 80B. A region separated upward from the upper surface of the lower wall 80B functions as the pipe drain port 32 of the drain pipe 30. In the specific example illustrated in FIG. 11, the lower end portion of the downward portion 30B of the drain pipe 30 is located at a position corresponding to the end portion of the lower wall 80B of the drain receiver 80, but the relative position of the lower end portion of the downward portion 30B with respect to the drain receiver 80 is not limited to the specific example illustrated in FIG. 11. As illustrated in FIG. 11, the pipe drain port 32 of the drain pipe 30 is formed at a position shifted in the horizontal direction with respect to the receiver drain port 82.

Since the lower wall 80B of the drain receiver 80 is disposed in a posture inclined with respect to the horizontal plane, the water flowing into the drain receiver 80 from the pipe drain port 32 of the drain pipe 30 is temporarily stored in the storage portion 84 at least until the water reaches the receiver drain port 82 from the pipe drain port 32.

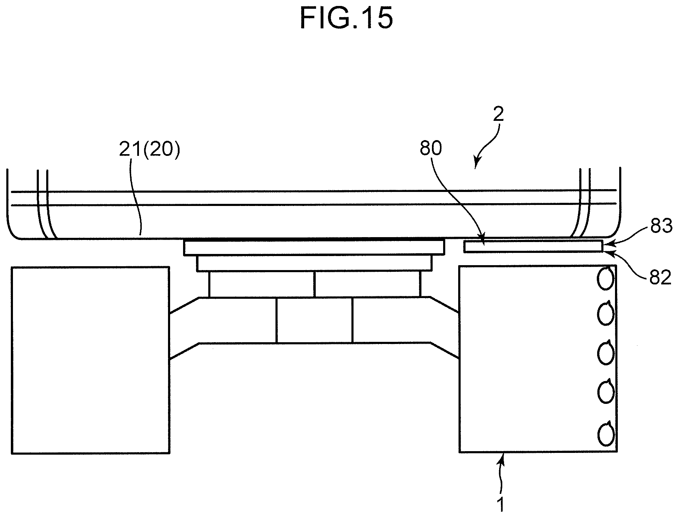

In the second modification, as illustrated in FIG. 15, when the upper slewing body 2 is disposed in such a posture that the direction in which the crawler travelling device of the lower travelling body 1 extends (the direction in which the crawler frame extends) coincides with the front-rear direction of the upper slewing body 2, the position of the receiver drain port 82 may be set so that the water discharged from the receiver drain port 82 does not splash on the lower travelling body 1 (for example, the crawler travelling device). When the upper slewing body 2 slews with respect to the lower travelling body 1, as illustrated in FIG. 14, water discharged from the receiver drain port 82 may be applied to the lower travelling body 1 (for example, the crawler travelling device).

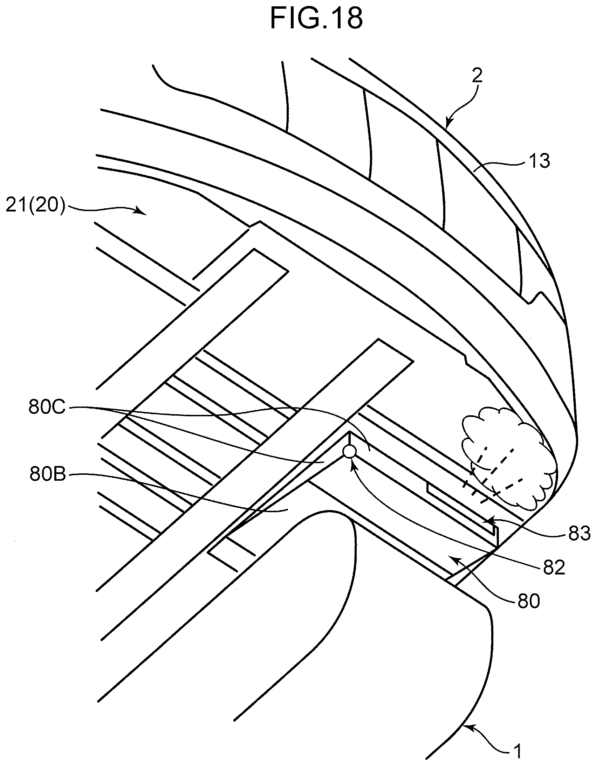

Next, a third modification will be described. As illustrated in FIG. 18, the drain receiver 80 in the third modification illustrated in FIGS. 16 and 17 is attached to a lower surface of the frame body 21 of the machine body frame 20. The drain receiver 80 includes a receiver inlet 85 for receiving water from the pipe drain port 32 of the drain pipe 30 and a receiver drain port 82. The receiver inlet 85 is formed in the upper wall 80A of the drain receiver 80.

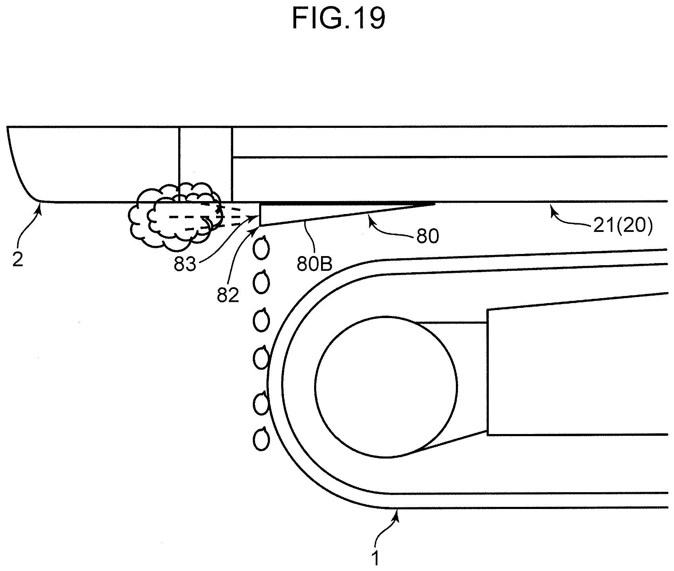

In the specific example illustrated in FIG. 17, the lower wall 80B includes a first lower wall 80B1 at a position corresponding to the storage portion 84 and a second lower wall 80B2 at a position shifted laterally with respect to the first lower wall 80B1. The first lower wall 80B1 is positioned lower than the second lower wall 80B2. As a result, the water flowing into the drain receiver 80 is stored in the storage portion 84. In the specific example illustrated in FIG. 17, the receiver drain port 82 is formed in the first lower wall 80B1 or the vicinity thereof, but may be formed in the second lower wall 80B2. In the specific example illustrated in FIG. 17, the receiver drain port 82 is formed at the boundary portion between the lower wall 80B and the side wall 80C, but the position where the receiver drain port 82 is formed is not limited to the specific example illustrated in FIG. 16. In the specific example illustrated in FIG. 19, the lower wall 80B of the drain receiver 80 is disposed in a posture inclined with respect to the horizontal plane, and the receiver drain port 82 is formed in a portion corresponding to an end portion of the lowest portion of the lower wall 80B. As illustrated in FIG. 17, the drain receiver 80 may include a partition 80D that partitions the space in the drain receiver 80 into the storage portion 84 and other portions.

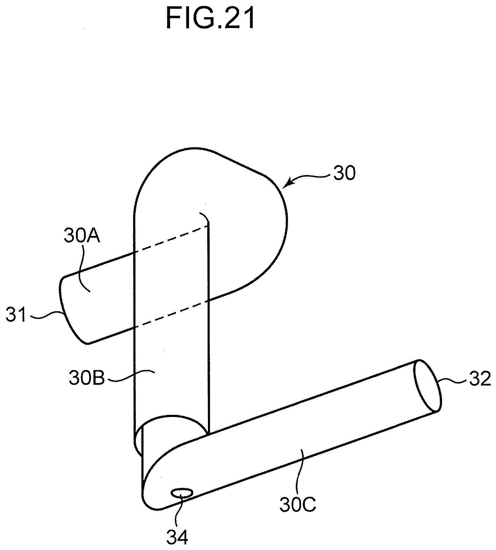

In the third modification, as illustrated in FIGS. 16 and 21, the drain pipe 30 includes a downstream lateral portion 30C which is a portion extending laterally between the lower surface of the machine body frame 20 and the bottom surface of the drain receiver 80 (the upper surface of the lower wall 80B), and the pipe drain port 32 is formed at the distal end portion of the downstream lateral portion 30C. The downstream lateral portion 30C will be described later.

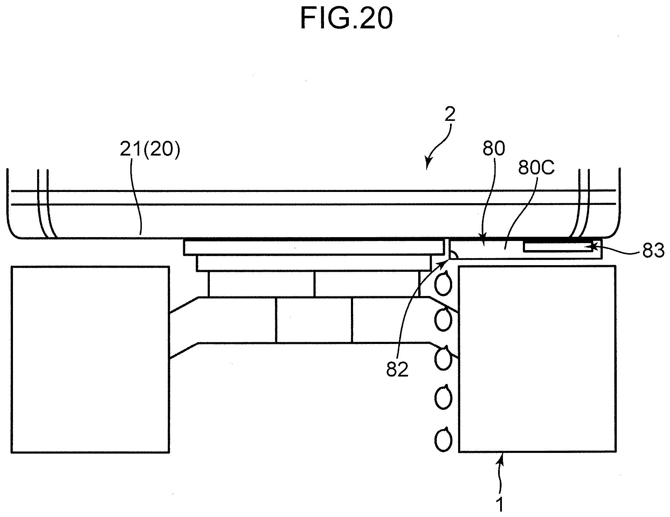

In the third modification, as illustrated in FIG. 20, when the upper slewing body 2 is disposed in such a posture that the direction in which the crawler travelling device of the lower travelling body 1 extends (the direction in which the crawler frame extends) coincides with the front-rear direction of the upper slewing body 2, the position of the receiver drain port 82 may be set so that the water discharged from the receiver drain port 82 does not splash on the lower travelling body 1 (for example, the crawler travelling device). When the upper slewing body 2 slews with respect to the lower travelling body 1, as illustrated in FIG. 19, water discharged from the receiver drain port 82 may be applied to the lower travelling body 1 (for example, the crawler travelling device).

The drain receiver 80 in the first to third modifications further includes a feature according to a ninth aspect described below.

### [Ninth Feature]

Each of the drain receiver 80 in the first modification illustrated in FIGS. 6 and 7, the second modification illustrated in FIGS. 11 and 12, and the third modification illustrated in FIGS. 16 and 17 further includes a water vapor drain port 83 for discharging water vapor. Each drain receiver 80 can discharge liquid water out of the water in the drain receiver 80 from the receiver drain port 82, and can discharge gaseous water (water vapor) from the water vapor drain port 83. In this case, the drain receiver 80 has a gas-liquid separation function which is a function of separating water discharged from the drain pipe 30 and flowing into the drain receiver 80 into liquid water and gaseous water (water vapor), that is, a function of separately discharging liquid water and water vapor in the drain receiver 80.

### [Tenth Feature]

In each of the first to third modifications, the receiver drain port 82 is formed in a lower portion of the drain receiver 80, and the water vapor drain port 83 is formed in a side portion of the drain receiver 80. In this case, out of the water in the drain receiver 80, the drain receiver 80 can discharge the liquid water from the receiver drain port 82 formed in the lower portion of the drain receiver 80, and can discharge the gaseous water (water vapor) from the water vapor drain port 83 formed in the side portion of the drain receiver 80. Specifically, it is as follows.

In the drain receiver 80 according to the first modification illustrated in FIGS. 6 and 7, the receiver drain port 82 is formed in the lower wall 80B, and the water vapor drain port 83 is formed in the side wall 80C. Specifically, the receiver drain port 82 is formed in the first lower wall 80B1 at a position corresponding to the storage portion 84 in the lower wall 80B, and the water vapor drain port 83 is formed in the side wall 80C rising from an end portion of the second lower wall 80B2 at a position higher than the first lower wall 80B1. The water vapor drain port 83 is formed at a position higher than the receiver drain port 82. The drain receiver 80 can discharge liquid water from the receiver drain port 82 at a relatively low position, and can discharge gaseous water (water vapor) from the water vapor drain port 83 at a relatively high position. The liquid water in the drain receiver 80 falls downward from the receiver drain port 82, and the gaseous water (water vapor) in the drain receiver 80 is discharged laterally from the water vapor drain port 83. In the specific example illustrated in FIGS. 8 and 9, the drain receiver 80 is disposed such that the water vapor in the drain receiver 80 is discharged rearward from the water vapor drain port 83, but the discharge direction of the water vapor is not limited to the specific example illustrated in FIGS. 8 and 9, and may be other directions such as rightward, leftward, forward, downward, and upward.

In the drain receiver 80 in the second modification illustrated in FIGS. 11 and 12, as described above, the receiver drain port 82 is configured by at least a part of the opening region corresponding to the portion where the side wall does not exist among the plurality of sides of the lower wall 80B. Specifically, the receiver drain port 82 is configured by the lowest portion of the opening region. As illustrated in FIG. 11, the water vapor drain port 83 is configured by the opening region. The liquid water in the drain receiver 80 falls downward from the receiver drain port 82, and the gaseous water (water vapor) in the drain receiver 80 is discharged laterally from the water vapor drain port 83. In the specific example illustrated in FIG. 13, the drain receiver 80 is disposed such that the water vapor in the drain receiver 80 is discharged rightward from the water vapor drain port 83, but the discharge direction of the water vapor is not limited to the specific example illustrated in FIG. 13, and may be other directions such as rearward, leftward, forward, downward, and upward.

In the drain receiver 80 in the third modification illustrated in FIGS. 16 and 17, as described above, the receiver drain port 82 is formed at the boundary portion between the lower wall 80B and the side wall 83C, and the water vapor drain port 83 is formed in the side wall 83C. The liquid water in the drain receiver 80 falls downward from the receiver drain port 82, and the gaseous water (water vapor) in the drain receiver 80 is discharged laterally from the water vapor drain port 83. In the specific example illustrated in FIGS. 18 and 19, the drain receiver 80 is disposed such that the water vapor in the drain receiver 80 is discharged rearward from the water vapor drain port 83, but the discharge direction of the water vapor is not limited to the specific example illustrated in FIGS. 18 and 19, and may be other directions such as rightward, leftward, forward, downward, and upward.

### [Eleventh Feature]

In the first to third modifications, the drain receiver 80 is disposed below the machine body frame 20 and configured to receive water discharged from the pipe drain port 32. In this case, the drain receiver 80 can receive the water discharged from the pipe drain port 32 of the drain pipe 30 below the machine body frame 20. The drain receiver 80 is attached to the lower surface of the machine body frame 20. Each of the drain receivers 80 in the first to third modifications has a storage function and a gas-liquid separation function. In addition, each of the drain receivers 80 is disposed below the machine body frame 20, thereby also having a scattering suppression function and a protection function. Since the drain receiver 80 has various functions, members may not be disposed for each function.

The construction machines 100 according to the third modification illustrated in FIGS. 16 to 21 further include the twelfth and thirteenth features described below.

### [Twelfth Feature]

In the third modification, the drain receiver 80 is disposed below the machine body frame 20, the drain pipe 30 includes a downstream lateral portion 30C extending laterally between the machine body frame 20 (the lower surface of the frame body 21) and the bottom surface of the drain receiver 80 (the upper surface of the lower wall 80B), and the pipe drain port 32 is formed at the distal end portion of the downstream lateral portion 30C. In this case, even if the thickness (dimension in the vertical direction) of the drain receiver 80 is designed to be small, a distance between the pipe drain port 32 and the inner surface of the drain receiver 80 (inner surface of the side wall 80C) can be easily secured as illustrated in FIG. 17 as compared with the case where the pipe drain port 32 is formed at the lower end portion of the downward extending portion. This makes it possible to reduce a pressure loss at the time of discharging water in the drain pipe 30, thereby suppressing a reduction in drainage efficiency in the drain pipe 30.

In the specific example illustrated in FIG. 16, since the drain receiver 80 includes not only the lower wall 80B but also the upper wall 80A, the downstream lateral portion 30C of the drain pipe 30 extends laterally between the upper wall 80A and the lower wall 80B. In the specific example illustrated in FIG. 17, the downstream lateral portion 30C of the drain pipe 30 extends laterally along the first lower wall 80B1 of the lower wall 80B. Specifically, the downstream lateral portion 30C extends in a direction approaching the water vapor drain port 83. However, the extending direction of the downstream lateral portion 30C is not limited to the specific example illustrated in FIG. 17. The downstream lateral portion 30C may be a drain changing member capable of adjusting the position and direction of the pipe drain port 32 by changing its direction.

### [Thirteenth Feature]

In the third modification, as illustrated in FIG. 21, the drain pipe 30 has a drain hole 34 in a portion of the lower surface of the downstream lateral portion 30C upstream of the pipe drain port 32. In this case, since at least a part of the water guided to the downstream lateral portion 30C is discharged from the drain hole 34, it is possible to effectively suppress the retention of water in the downstream lateral portion 30C of the drain pipe 30. In addition, freezing of water in the downstream lateral portion 30C can also be suppressed.

In the specific example illustrated in FIG. 21, the drain hole 34 is formed in a portion immediately below the downward portion 30B in the downstream lateral portion 30C. However, the formation site of the drain hole 34 is not limited to the specific example illustrated in FIG. 21.

### [Fourteenth Feature]

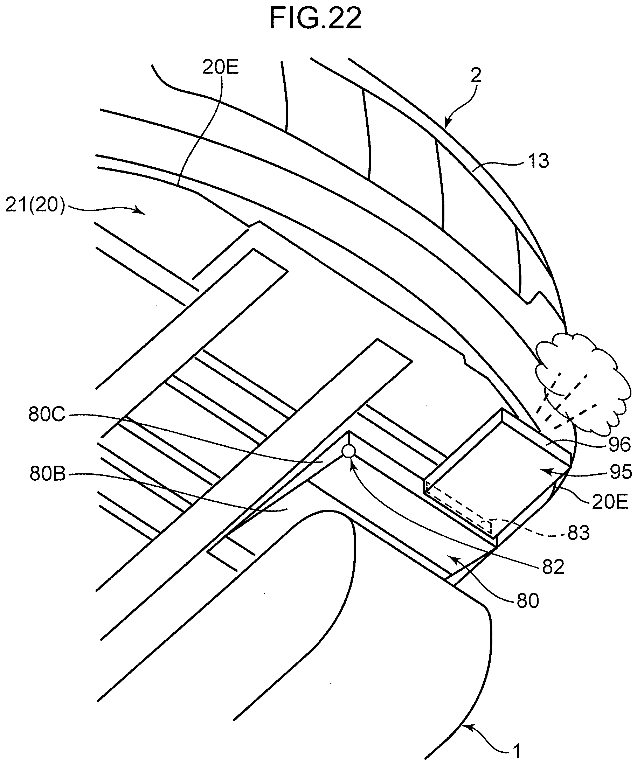

Next, features of construction machines 100 according to the fourth modification of the present embodiment will be described with reference to FIG. 22. The construction machine 100 according to the fourth modification includes the first to thirteenth features described above, and further includes a fourteenth feature described below. FIG. 22 is a view for explaining features of the construction machine 100 according to the fourth modification.

The construction machine 100 according to the fourth modification further includes a duct 95 into which water vapor discharged from the water vapor drain port 83 of the drain receiver 80 flows. In the fourth modification, the discharge position (relative position) of the water vapor with respect to the machine body frame 20 can be changed by changing the length of the duct 95, the shape of the duct 95, the direction of the duct 95, and the like. This means that even when there is a member that is likely to rust due to contact of water vapor near the drain receiver 80, the duct 95 can guide the water vapor discharged from the water vapor drain port 83 of the drain receiver 80 to a position away from the member that is likely to rust and discharge the water vapor from the position to the outside of the duct 95. As a result, it is possible to suppress water vapor from coming into contact with and condensing on a member that is likely to rust, and water droplets from adhering to the member.

Specifically, for example, as illustrated in FIG. 22, the duct 95 may be configured to guide water vapor toward the vicinity of an outer edge 20E of the machine body frame 20, or may be configured to guide water vapor further outward than the outer edge 20E. A duct drain port 96 for discharging water vapor is formed at a distal end portion of the duct 95.

### [Fifteenth Feature]

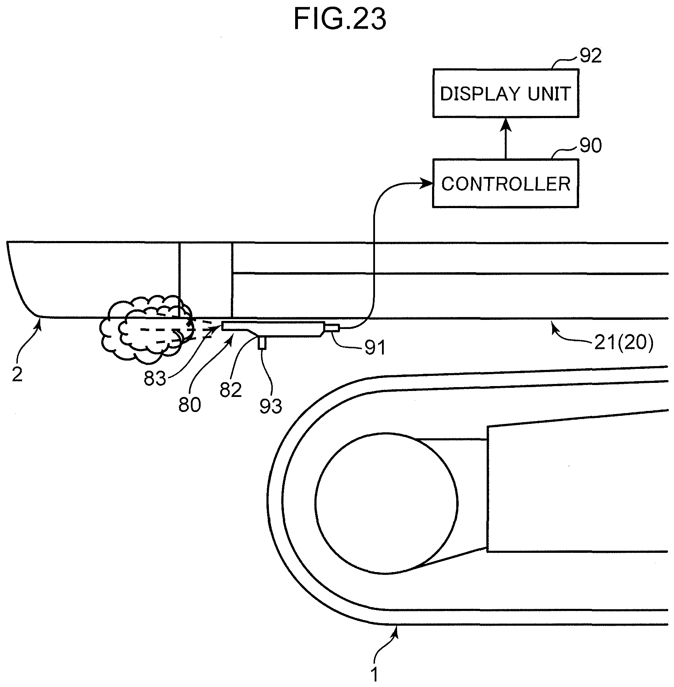

Next, features of a construction machine 100 according to the fifth modification of the present embodiment will be described with reference to FIG. 23. The construction machine 100 according to the fifth modification includes the first to eleventh features described above, and further includes the fifteenth and sixteenth features described below. FIG. 23 is a view for explaining features of the construction machine 100 according to the fifth modification.

The construction machine 100 according to the fifth modification further includes a water level sensor 91 that detects a water level in the drain receiver 80, and a controller 90, in which the controller 90 performs control for notifying a work person of information regarding the water level based on a detection result input from the water level sensor 91. In this case, a work person such as an operator can recognize the water level in the drain receiver 80.

Specifically, for example, the construction machine 100 may further include a display 92, in which the controller 90 may control the operation of the display 92 so that the information regarding the water level is displayed on the display 92 based on the detection result input from the water level sensor 91. The display 92 may be disposed in the cab 11, for example. Further, the display 92 may be included in a portable information device that can be carried away from the construction machine 100, or may be included in an information device that is disposed away from the construction machine 100.

### [Sixteenth Feature]

The construction machine 100 according to the fifth modification further includes a water level sensor 91 that detects a water level in the drain receiver 80, and a controller 90, in which the controller 90 controls timing of discharging the water stored in the drain receiver 80 from the drain receiver 80 based on a detection result input from the water level sensor 91. In this case, the water stored in the drain receiver 80 is discharged from the drain receiver 80 at an appropriate timing even if a work person such as an operator does not perform an operation of discharging the water stored in the drain receiver 80 from the drain receiver 80.

Specifically, for example, the drain receiver 80 may be configured such that the receiver drain port 82 can be opened and closed by an opening and closing member 93 as illustrated in FIG. 23, and in this case, the operation of the opening and closing member 93 is controlled based on a command output from the controller 90. As a result, for example, at a work site where discharge of water is regulated, by setting the receiver drain port 82 to the closed state, it is possible to avoid discharging water to the work site, and when the water level in the drain receiver 80 becomes high, by switching the receiver drain port 82 to the open state at a place where water can be discharged, it is possible to discharge or collect water before overflowing from the drain receiver 80.

### [Seventeenth Feature]

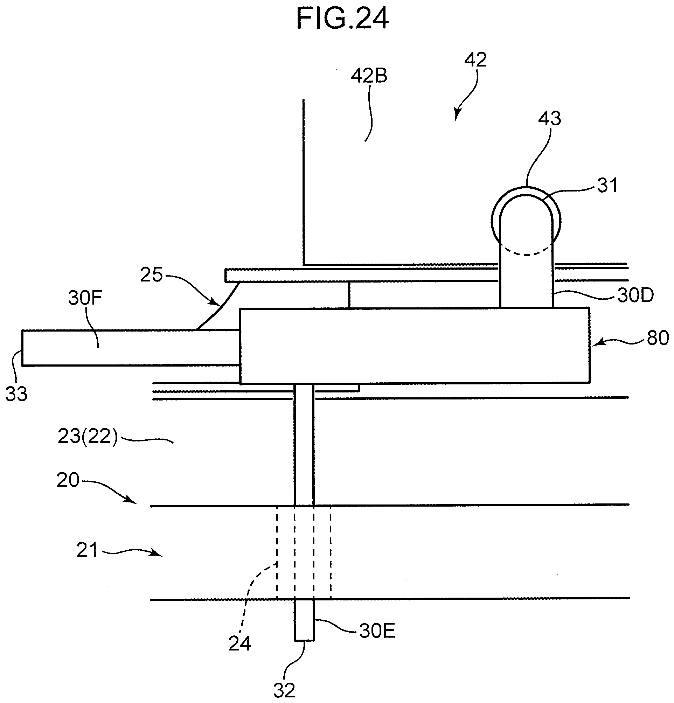

Next, features of construction machines 100 according to the sixth modification of the present embodiment will be described with reference to FIG. 24. The construction machine 100 according to the sixth modification includes the first to tenth features described above, and further includes a seventeenth feature described below. FIG. 24 is a view for explaining features of the construction machine 100 according to the sixth modification.

In the construction machine 100 according to the sixth modification, the drain receiver 80 is disposed in the middle of the drain pipe 30. Specifically, for example, the drain pipe 30 includes an upstream portion 30D extending from the device drain port 43 to the drain receiver 80 and a first downstream portion 30E extending from the drain receiver 80 to the pipe drain port 32, and the drain receiver 80 is disposed above the frame body 21 of the machine body frame 20 and is configured to receive water guided by the upstream portion 30D. In addition, the drain pipe 30 may further include a second downstream portion 30F extending from the drain receiver 80 to a water vapor drain port 33.

In the specific example illustrated in FIG. 24, the first downstream portion 30E is disposed so as to extend downward from the drain receiver 80, and the second downstream portion 30F is disposed so as to extend laterally from the drain receiver 80. The liquid water in the drain receiver 80 is discharged downward from the pipe drain port 32 of the first downstream portion 30E, and the gaseous water (water vapor) in the drain receiver 80 is discharged laterally from the water vapor drain port 33 of the second downstream portion 30F.

In the sixth modification, since the drain receiver 80 is disposed above the frame body 21 of the machine body frame 20, that is, in the machine chamber 14, it is difficult for the drain receiver 80 to interfere with a member below the machine body frame 20.

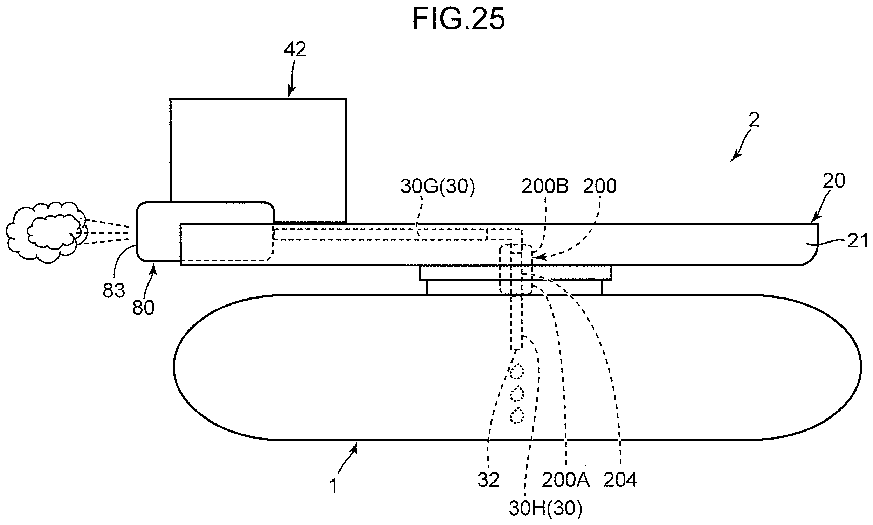

Next, the eighteenth to twenty-fourth features of the present embodiment will be described with reference to FIGS. 25 to 34. Note that the construction machine 100 may include only one of the eighteenth to twenty-fourth features, or may include a plurality of features of the eighteenth to twenty-fourth features.

### [Eighteenth Feature]

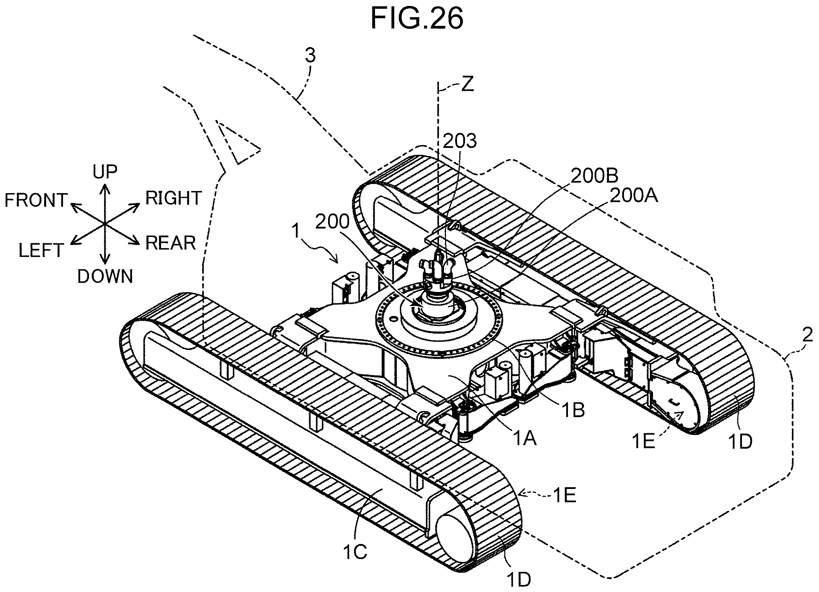

As illustrated in FIGS. 25 and 26, the construction machine 100 includes a lower travelling body 1, an upper slewing body 2, and a swivel joint 200 disposed on the slewing axis Z. The swivel joint 200 has a guide path 204 for receiving water guided by the drain pipe 30 and guiding this water downward. In this case, since the water guided by the drain pipe 30 is guided downward through the guide path 204 of the swivel joint 200 disposed on the slewing axis Z, the frequency of occurrence of troubles such as grime and corrosion caused by water splashing on structures such as the crawler travelling device and the car body of the lower travelling body 1 is reduced.

The lower travelling body 1 includes a car body 1A and a pair of left and right crawler travelling devices disposed on the left and right of the car body 1A and supporting the car body 1A. The car body 1A includes a slewing bearing 1B disposed around the slewing axis Z. Each crawler travelling device includes a crawler frame 1C extending in the front-rear direction, a crawler 1D including a large number of shoes, and a travelling motor 1E for rotating the crawler 1D.

The upper slewing body 2 includes a machine body frame 20 supported by the lower travelling body 1 via the slewing bearing 1B and having an insertion port formed in a central portion of the slewing bearing 1B. The swivel joint 200 is a joint disposed at the slewing center of the upper slewing body 2 to connect a plurality of upper hydraulic pipes (not illustrated) connected to the hydraulic device of the upper slewing body 2 and a plurality of lower hydraulic pipes (not illustrated) connected to a travelling motor of the lower travelling body 1. The swivel joint 200 includes a lower connection portion 200A fixed to the car body 1A of the lower travelling body 1, and an upper connection portion 200B rotatably supported by the lower connection portion 200A and protruding above the machine body frame 20 through the insertion port.

As illustrated in FIG. 26, the lower connection portion 200A is fixed to the car body 1A. In the lower connection portion 200A, a plurality of lower hydraulic pipes (not illustrated) extending from a hydraulic motor (travelling motor) are connected to a lower connection port (not illustrated) formed in the lower connection portion 200A. On the other hand, the upper connection portion 200B is fixed to the machine body frame 20. In the upper connection portion 200B, a plurality of upper hydraulic pipes (not illustrated) extending from the hydraulic device group are connected to an upper connection port 203 formed in the upper connection portion 200B.

Inside the swivel joint 200, a plurality of oil passages are formed in which a communication state is always maintained between the upper connection port 203 and the lower connection port corresponding to each other even when the upper connection portion 200B rotates with respect to the lower connection portion 200A.

In this aspect, the swivel joint 200 further includes the guide path 204 described above. The guide path 204 may be, for example, a through hole penetrating the body of the swivel joint 200 in the vertical direction. In the specific example illustrated in FIG. 25, the guide path 204 is formed along the slewing axis Z at the center of the swivel joint 200. However, the guide path may be formed at a position shifted in the horizontal direction with respect to the center of the swivel joint 200, or may be formed at a position shifted in the horizontal direction with respect to the slewing axis Z. A part 30G of the drain pipe 30 is connected to an upper end of the guide path 204, and another part 30H of the drain pipe is connected to a lower end of the guide path 204.

In the specific example of FIG. 25, the construction machine 100 further includes a drain receiver 80 that receives water guided by an upstream portion (not illustrated) of the drain pipe 30 between the fuel cell device 42 and the swivel joint 200. In this case, water discharged from the fuel cell device 42 flows through the fuel cell device 42, an upstream portion of the drain pipe 30, the drain receiver 80, the part 30G of the drain pipe 30 (intermediate portion 30G of the drain pipe 30), the swivel joint 200, and the other part 30H of the drain pipe 30 (downstream portion 30H of the drain pipe 30) in this order.

The gaseous and liquid water discharged from the fuel cell device 42 to the upstream portion of the drain pipe 30 are separated in the drain receiver 80, and the water vapor is discharged from water vapor drain port 83 of the drain receiver 80, for example, backward. The liquid water is guided from the drain receiver 80 to the upper end of the guide path 204 of the swivel joint 200 through the intermediate portion 30G of the drain pipe 30, and is further discharged to the outside from the drain port 32 of the downstream portion 30H through the guide path 204 and the downstream portion 30H. In the specific example of FIG. 25, the drain receiver 80 can be omitted, and in this case, the upstream portion of the drain pipe 30 may be connected to the upper end of the guide path 204 of the swivel joint 200.

### [Nineteenth Feature]

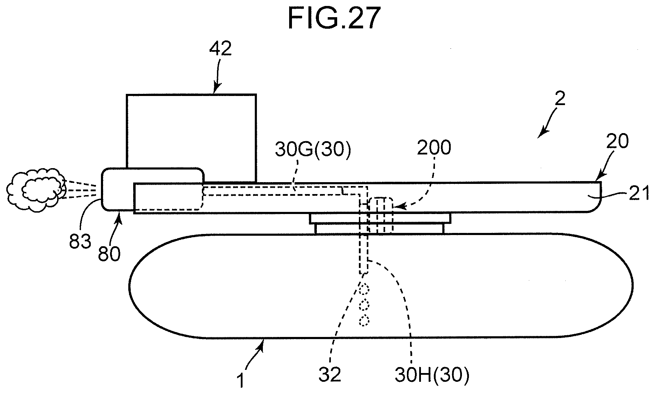

As illustrated in FIG. 27, the construction machine 100 includes a swivel joint 200 disposed on the slewing axis Z. The drain pipe 30 has a portion 30H extending downward along the outer surface of the swivel joint 200, and the pipe drain port 32 is formed in the portion 30H (for example, a lower end of the portion 30H). In this case, since the water guided by the drain pipe 30 is guided downward through the portion 30H of the drain pipe 30 extending downward along the outer surface of the swivel joint 200 and is discharged from the pipe drain port 32 formed in the portion 30H, the frequency of occurrence of troubles such as grime and corrosion caused by water splashing on structures such as the crawler travelling device and the car body 1A is reduced.

### [Twentieth Feature]

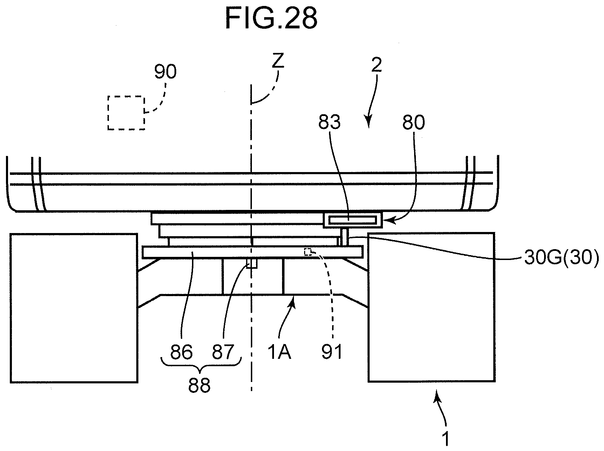

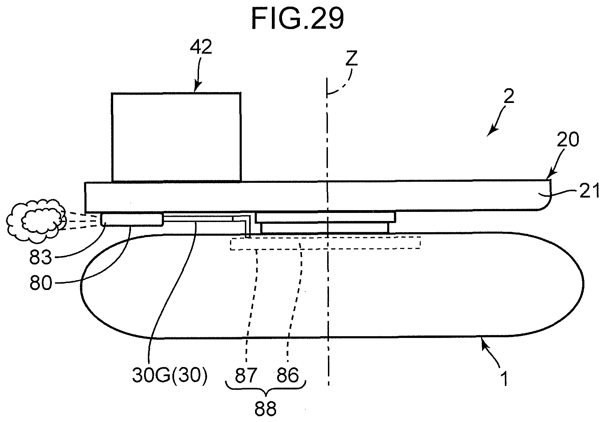

As illustrated in FIGS. 28 and 29, the construction machine 100 includes a lower travelling body 1 having a car body 1A, an upper slewing body 2, and a lower drain receiver 88 which is supported by the car body 1A and receives water guided by a part 30G of a drain pipe 30. In this case, the water guided by the drain pipe 30 can be received by the lower drain receiver 88 supported by the car body 1A, so that the water is prevented from scattering to the car body 1A and structures around the car body 1A. The lower drain receiver 88 is disposed in the middle of the drain pipe 30.

In the specific example illustrated in FIGS. 28 and 29, the lower drain receiver 88 has an annular shape surrounding the slewing axis Z. In this case, regardless of the slewing angle of the upper slewing body 2 with respect to the lower travelling body 1, the lower drain receiver 88 can receive the water guided by the drain pipe 30.

In the specific examples of FIGS. 28 and 29, the construction machine 100 further includes a drain receiver 80 that receives water guided by an upstream portion (not illustrated) of the drain pipe 30 between the fuel cell device 42 and the lower drain receiver 88. In this case, water discharged from the fuel cell device 42 flows through the fuel cell device 42, an upstream portion of the drain pipe 30, the drain receiver 80, the part 30G of the drain pipe 30 (downstream portion 30G of the drain pipe 30), and the lower drain receiver 88 in this order.

The gaseous and liquid water discharged from the fuel cell device 42 to the upstream portion of the drain pipe 30 are separated in the drain receiver 80, and the water vapor is discharged from water vapor drain port 83 of the drain receiver 80, for example, backward. The liquid water is guided from the drain receiver 80 to the lower drain receiver 88 through the downstream portion 30G of the drain pipe 30. In the specific examples of FIGS. 28 and 29, the drain receiver 80 can be omitted, and in this case, an upstream portion of the drain pipe 30 may be connected to the lower drain receiver 88.

### [Twenty-first Feature]

In the construction machine 100, the lower drain receiver 88 includes a lower storage portion 86 which is a storage portion capable of storing water, and a lower receiver drain port 87 capable of discharging the water stored in the lower storage portion 86. The lower storage portion 86 is a portion that occupies most of the lower drain receiver 88, and has, for example, an annular shape. In this aspect, water can be temporarily stored in the lower storage portion 86, and the stored water can be drained from the lower receiver drain port 87.

Further, the construction machine 100 may further include a water level sensor 91 that detects a water level in the lower receiver drain port 87, and a controller 90. In this case, the controller 90 may perform control for notifying the work person of information regarding the water level based on the detection result input from the water level sensor 91. In addition, the controller 90 may control a timing (for example, timing of opening and closing the lower receiver drain port 87) at which the water stored in the lower storage portion 86 of the lower drain receiver 88 is discharged from the lower storage portion 86 based on the detection result input from the water level sensor 91.

### [Twenty-second Feature]

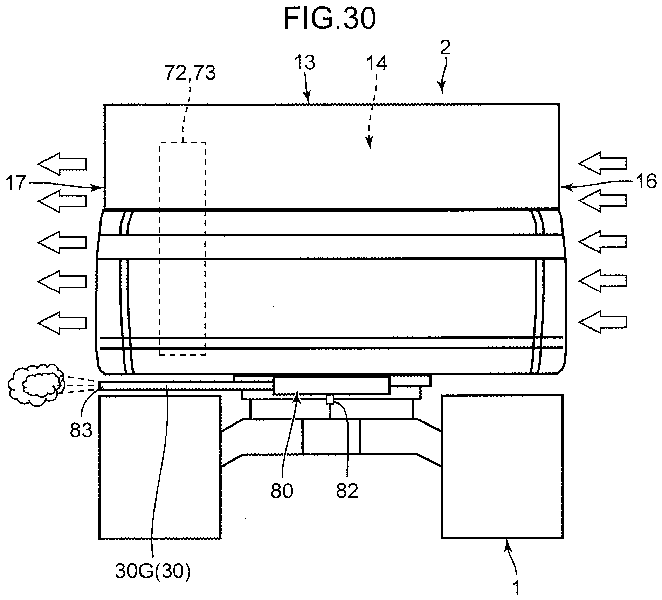

As illustrated in FIG. 30, the construction machine 100 includes a lower travelling body 1, an upper slewing body 2, and a water vapor drain port 83 for discharging water vapor contained in water guided by a drain pipe 30. The upper slewing body 2 includes an outer wall 13 defining a machine chamber 14. An exhaust port 17 for discharging air inside the machine chamber 14 is formed in the outer wall 13. The water vapor drain port 83 is configured to discharge water vapor in a direction along a discharge direction of air discharged from the exhaust port 17. In this aspect, since the water vapor drain port 83 discharges the water vapor in the direction along the discharge direction of the air discharged from the exhaust port 17, the discharged water vapor easily moves away from the construction machine 100. As a result, the discharged water vapor is suppressed from entering the inside of the construction machine 100 again.

In the specific example of FIG. 30, the exhaust port 17 and the water vapor drain port 83 are formed in, for example, the left side portion among the right side portion, the left side portion, the rear side portion, and the front side portion of the construction machine 100. In the specific example of FIG. 30, a heat exchanger is disposed inside the machine chamber 14. The heat exchanger may include at least one of an oil cooler 72 and a radiator 73 as in the aspect illustrated in FIG. 2. The temperature of the air discharged from the exhaust port 17 is higher than the outside air temperature. In this case, since the water vapor discharged from the water vapor drain port 83 is mixed with the high-temperature air discharged from the exhaust port 17, the condensation of the water vapor is suppressed, and thus, for example, the frequency of the occurrence of the visibility defect caused by the condensation of the water vapor in winter can be reduced.

In the specific example of FIG. 30, the water vapor drain port 83 is formed at an end portion of a downstream portion 30G which is a part of the drain pipe 30. The construction machine 100 further includes a drain receiver 80 that receives water guided by an upstream portion (not illustrated) of the drain pipe 30 between the fuel cell device 42 and the downstream portion 30G of the drain pipe 30. In this case, water discharged from the fuel cell device 42 flows through the fuel cell device 42, an upstream portion of the drain pipe 30, the drain receiver 80, and the downstream portion 30G of the drain pipe 30 in this order.

The gaseous and liquid water discharged from the fuel cell device 42 to the upstream portion of the drain pipe 30 are separated in the drain receiver 80, and the liquid water is discharged to the outside from receiver drain port 82 of the drain receiver 80. Water vapor is discharged to the outside from the water vapor drain port 83 through the downstream portion 30G of the drain pipe 30 from the drain receiver 80. In the specific example of FIG. 30, the drain receiver 80 can be omitted, and in this case, the upstream portion of the drain pipe 30 may be connected to the downstream portion 30G of the drain pipe 30.

### [Twenty-third Feature]

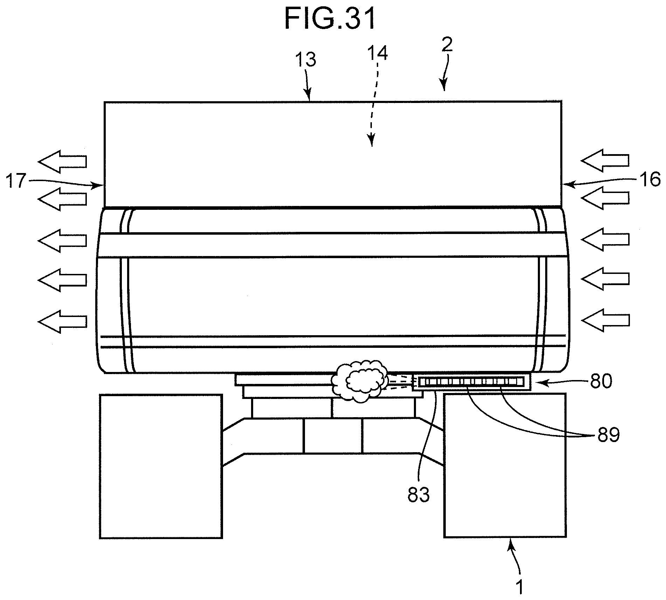

As illustrated in FIG. 31, the construction machine 100 includes a lower travelling body 1, an upper slewing body 2, and a water vapor drain port 83 for discharging water vapor contained in water guided by a drain pipe 30. The upper slewing body 2 includes an outer wall 13 defining a machine chamber 14. The intake port 16 through which air outside the machine chamber 14 is sucked into the machine chamber 14 is formed in the outer wall 13. The water vapor drain port 83 is provided with a louver 89 as an example of a guide plate that guides water vapor so that a discharge direction of the water vapor discharged from the water vapor drain port 83 is a direction away from the intake port 16 (for example, an opposite direction). In this aspect, since the water vapor discharged from the water vapor drain port 83 is guided by the louver 89 in a direction away from the intake port 16, the discharged water vapor is suppressed from entering the machine chamber 14 through the intake port 16 again.

In the specific example illustrated in FIG. 31, the intake port 16 is formed on the right side surface of the outer wall 13, and the discharge direction of the water vapor discharged from the water vapor drain port 83 is, for example, a diagonally backward left direction. The water vapor drain port 83 is formed in the drain receiver 80. The drain receiver 80 has a receiver drain port (not illustrated) for draining water (liquid water) in the drain receiver 80.

### [Twenty-fourth Feature]

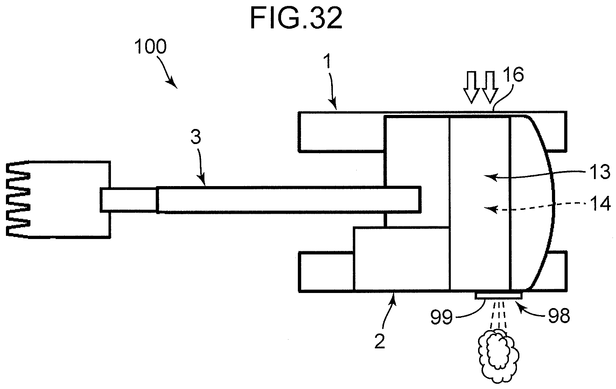

As illustrated in FIGS. 32 to 34, the construction machine 100 includes a lower travelling body 1, an upper slewing body 2, and a water vapor drain port 99 for discharging water vapor contained in water guided by a drain pipe 30. The upper slewing body 2 includes an outer wall 13 defining a machine chamber 14. The intake port 16 through which air outside the machine chamber 14 is sucked into the machine chamber 14 is formed in the outer wall 13. The water vapor drain port 99 and the intake port 16 are formed at positions where the machine chamber 14 is interposed therebetween. In each of the aspects illustrated in FIGS. 32 to 34, since the water vapor drain port 99 and the intake port 16 are formed at positions where the machine chamber 14 is interposed therebetween, the water vapor discharged from the water vapor drain port 99 is suppressed from entering the machine chamber 14 through the intake port 16 again.

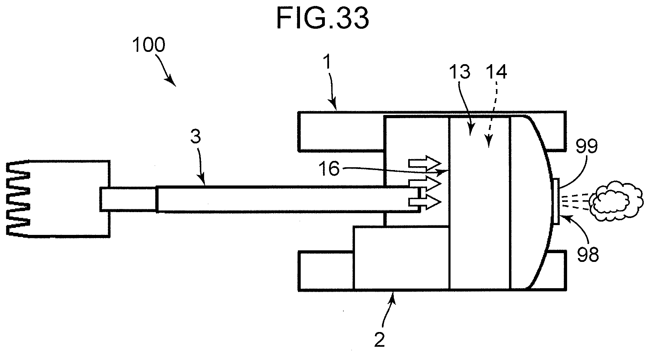

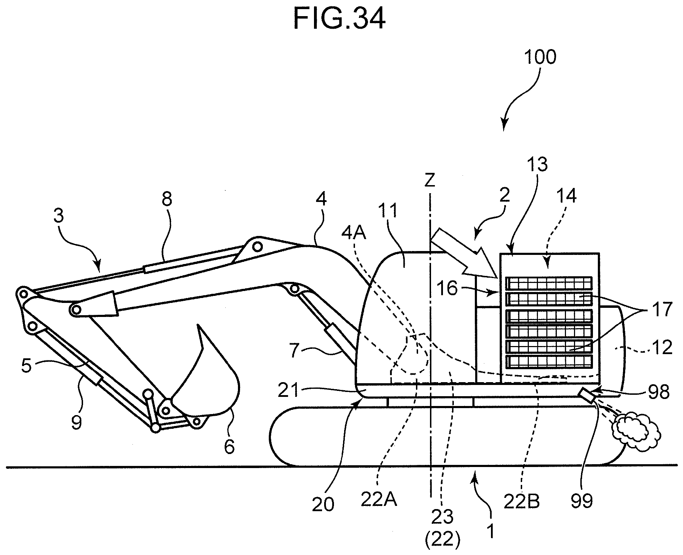

In the specific example illustrated in FIG. 32, the intake port 16 is formed on the right side portion of the outer wall 13, and the water vapor drain port 99 is formed in a duct 98 disposed on the left of the machine chamber 14. In the specific example illustrated in FIG. 33, the intake port 16 is formed on the front side portion of the outer wall 13, and the water vapor drain port 99 is formed in the duct 98 disposed behind the machine chamber 14. In the specific example illustrated in FIG. 34, the intake port 16 is formed in an upper portion of the front side portion of the outer wall 13, and the water vapor drain port 99 is formed in the duct 98 disposed behind and below the machine chamber 14.

### [Other Modifications]

The embodiment of the present disclosure is described above, but the present disclosure is not limited to the embodiment, and includes a modification below, for example.
(A) Each of the construction machines 100 illustrated in FIGS. 1 to 22 has the first to sixth features, but it is sufficient that at least the first feature among these features is provided, and at least one of the second to sixth features may not be provided. Each of the construction machines 100 according to the first to sixth modifications illustrated in FIGS. 6 to 24 has the seventh to tenth features, but it is sufficient that at least the seventh feature among these features is provided, and at least one of the eighth to tenth features may not be provided. Each of the construction machines 100 according to the first to fifth modifications illustrated in FIGS. 6 to 23 has the eleventh feature, but may not have the eleventh feature. The construction machine 100 according to the third modification illustrated in FIGS. 16 to 21 has the twelfth and thirteenth features, but it is sufficient that at least the twelfth feature is provided, and the thirteenth feature may not be provided. The construction machine 100 according to the fifth modification illustrated in FIG. 23 may include only one of the fifteenth and sixteenth features.
(B) Drain pipe
   In the above embodiment, the drain pipe 30 is inserted into the opening 24 formed in the machine body frame 20, the pipe drain port 32 is positioned below the opening 24, and the water in the drain pipe 30 is discharged from the pipe drain port 32 below the machine body frame 20 (outside the construction machine 100). However, for example, the drain pipe 30 may be inserted into an opening (not illustrated) formed in the outer wall 13, the pipe drain port 32 may be positioned outside the outer wall 13, and the water in the drain pipe 30 may be discharged from the pipe drain port 32 to the outside of the outer wall 13 (outside the construction machine 100). In this case, the opening may be formed in a side portion (right side portion, left side portion, front side portion, or rear side portion) of the outer wall 13.
(C) Pipe drain port
   In the above embodiment, the pipe drain port 32 is positioned below the device drain port 43, but may be positioned at the same height as the height of the device drain port 43. Further, in the above embodiment, the pipe drain port 32 is formed at the lower end portion of the downward portion 30B of the drain pipe 30, but is not necessarily formed at the lower end portion of the drain pipe 30. The drain pipe 30 may have only one pipe drain port or a plurality of pipe drain ports. The plurality of pipe drain ports may be formed at intervals in the longitudinal direction of the drain pipe 30, for example.
(D) Fuel cell device
   In the above embodiment, the fuel cell device 42 is supported by the machine body frame 20 by being disposed on the machine body frame 20, but may be supported by, for example, the outer wall 13 supported by the machine body frame 20. In this case, the fuel cell device 42 may be supported by the outer wall 13 via a device support member (not illustrated) fixed to the outer wall 13.
(E) Drain receiver
   The drain receiver 80 may be a container having a lower wall 80B and a side wall 80C and having no upper wall (container having an open upper portion). In this case, the drain receiver 80 has the storage function, the scattering suppression function, and the protection function. In addition, the drain receiver 80 may be a simple plate-like member including a lower wall, for example. In this case, the drain receiver 80 is disposed at a position covering the pipe drain port 32 of the drain pipe 30 from below, and thus has at least one of the scattering suppression function and the protection function.
(F) Swivel joint
   An object of the swivel joint according to the present disclosure is to reduce the frequency of occurrence of problems such as grime and corrosion caused by water discharged from a fuel cell device being applied to a structure such as a crawler travelling device. The swivel joint has a guide path for receiving water guided by a drain pipe connected to a device drain port of the fuel cell device and guiding the water downward. In this swivel joint, since the water guided by the drain pipe is guided downward through the guide path of the swivel joint disposed on the slewing axis, the frequency of occurrence of troubles such as grime and corrosion caused by water splashing on a structure such as a crawler travelling device is reduced.

As described above, according to the present disclosure, there is provided a construction machine capable of preventing water from remaining in a drain pipe for discharging water discharged from a fuel cell device to the outside of the construction machine.

A construction machine according to a first aspect includes: a fuel cell device having a device drain port; and a drain pipe connected to the device drain port, in which the drain pipe is disposed at a position lower than or equal to a height of the device drain port.

In the construction machine according to the first aspect, since the drain pipe connected to the device drain port of the fuel cell device is disposed at a position lower than or equal to the height of the device drain port, water discharged from the fuel cell device is less likely to remain in the drain pipe as compared with a case where the drain pipe is disposed upward toward the upper part of the machine body.

In the second aspect, the construction machine according to the first aspect preferably further includes the following configuration. That is, in the construction machine according to the second aspect, it is preferable that the drain pipe has a pipe drain port, and the pipe drain port is positioned below the device drain port. In this case, since the water in the drain pipe is more easily discharged from the pipe drain port, the water is less likely to remain in the drain pipe.

In the third aspect, the construction machine according to the second aspect preferably further includes the following configuration. That is, in the construction machine according to the third aspect, the pipe drain port is preferably formed at a lowermost portion of the drain pipe. In this case, the water in the drain pipe flows toward the lowermost portion of the drain pipe and is smoothly discharged from the pipe drain port formed at the lowermost portion.

In the fourth aspect, the construction machine according to the second or third aspect preferably further includes the following configuration. That is, it is preferable that the construction machine according to the fourth aspect further includes a machine body frame positioned below the fuel cell device, in which the drain pipe extends toward an opening formed in the machine body frame, and the pipe drain port is disposed in the opening or disposed below the opening. In this case, the water in the drain pipe can be discharged below the machine body frame through the pipe drain port disposed at the opening of the machine body frame or the pipe drain port disposed below the opening of the machine body frame.

In the fifth aspect, the construction machine according to the fourth aspect preferably further includes the following configuration. That is, in the construction machine according to the fifth aspect, it is preferable that the machine body frame includes a structural member and a non-structural member, and the opening is formed in the non-structural member, or formed between the structural member and the non-structural member. In this case, the water in the drain pipe can be discharged from the pipe drain port below the opening of the machine body frame without forming an opening in the structural member of the machine body frame.

In the sixth aspect, the construction machine according to the fifth aspect preferably further includes the following configuration. That is, in the construction machine according to the sixth aspect, the drain pipe preferably has a downward portion which is a portion extending downward at a position avoiding the structural member. In this case, the pipe drain port can be disposed in the opening formed in the machine body frame, or the drain pipe can be inserted into the opening formed in the machine body frame to position the pipe drain port below the opening of the machine body frame while satisfying the restriction condition that the opening is not formed in the structural member of the machine body frame and suppressing the increase in the length of the drain pipe. In this case, the drain pipe may have a lateral portion (upstream lateral portion) which is a portion extending laterally between the device drain port and the downward portion in order to avoid the structural member.

In the seventh aspect, the construction machine according to any one of the first to sixth aspects preferably further includes the following configuration. That is, the construction machine according to the seventh aspect preferably further includes a drain receiver that receives water guided by the drain pipe. In this case, the drain receiver may be disposed at a position to receive water discharged from the pipe drain port of the drain pipe, or may be disposed in the middle of the drain pipe.

In the eighth aspect, the construction machine according to the seventh aspect preferably further includes the following configuration. That is, in the construction machine according to the eighth aspect, the drain receiver preferably includes a storage portion capable of storing water, and a receiver drain port capable of discharging the water stored in the storage portion. In the eighth aspect, the drain receiver has a function of temporarily storing water, and also has a function of discharging at least a part of the water stored in the drain receiver from the receiver drain port.

In the ninth aspect, the construction machine according to the eighth aspect preferably further includes the following configuration. That is, in the construction machine according to the ninth aspect, the drain receiver preferably further includes a water vapor drain port for discharging water vapor. In the ninth aspect, the drain receiver can discharge liquid water out of the water in the drain receiver from the receiver drain port, and can discharge gaseous water (water vapor) from the water vapor drain port.

In the tenth aspect, the construction machine according to the ninth aspect preferably further includes the following configuration. That is, in the construction machine according to the tenth aspect, the receiver drain port is preferably formed in a lower portion of the drain receiver, and the water vapor drain port is preferably formed in a side portion of the drain receiver. In this case, out of the water in the drain receiver, the drain receiver can discharge the liquid water from the receiver drain port formed in the lower portion of the drain receiver, and can discharge the gaseous water (water vapor) from the water vapor drain port formed in the side portion of the drain receiver.

In the eleventh aspect, the construction machine according to any one of the seventh to tenth aspects preferably further includes the following configuration. That is, it is preferable that the construction machine according to the eleventh aspect further includes a machine body frame positioned below the fuel cell device, in which the drain receiver is disposed below the machine body frame and configured to receive water discharged from the pipe drain port. In this case, the drain receiver can receive the water discharged from the drain pipe below the machine body frame.

In the twelfth aspect, the construction machine according to any one of the seventh to eleventh aspects preferably further includes the following configuration. That is, in the construction machine according to the twelfth aspect, preferably, the drain receiver is disposed below the machine body frame, the drain pipe includes a downstream lateral portion which is a portion extending laterally between the machine body frame and a bottom surface of the drain receiver, and the pipe drain port is formed at a distal end portion of the downstream lateral portion. In this case, even if the thickness (dimension in the vertical direction) of the drain receiver is designed to be small, a distance between the pipe drain port and the inner surface of the drain receiver can be easily secured as compared with the case where the pipe drain port is formed at the lower end portion of the downward extending portion. This makes it possible to reduce a pressure loss at the time of discharging water in the drain pipe, thereby suppressing a reduction in drainage efficiency in the drain pipe.

In the thirteenth aspect, the construction machine according to the twelfth aspect preferably further includes the following configuration. That is, in the construction machine according to the thirteenth aspect, the drain pipe preferably has a drain hole in a portion upstream of the pipe drain port on a lower surface of the downstream lateral portion. In this case, the retention of water in the downstream lateral portion of the drain pipe can be effectively suppressed.

In the fourteenth aspect, the construction machine according to any one of the ninth to thirteenth aspects preferably further includes the following configuration. That is, the construction machine according to the fourteenth aspect may further include a duct into which water vapor discharged from the water vapor drain port flows. In the fourteenth aspect, the discharge position (relative position) of the water vapor with respect to the machine body frame can be changed by changing the length of the duct, the shape of the duct, the direction of the duct, and the like.

In the fifteenth aspect, the construction machine according to any one of the seventh to fourteenth aspects preferably further includes the following configuration. That is, it is preferable that the construction machine according to the fifteenth aspect further includes a water level sensor that detects a water level in the drain receiver, and a controller, in which the controller performs control for notifying a work person of information regarding the water level based on a detection result input from the water level sensor. In this case, a work person such as an operator can recognize the water level in the drain receiver.

In the sixteenth aspect, the construction machine according to any one of the seventh to fifteenth aspects preferably further includes the following configuration. That is, it is preferable that the construction machine according to the sixteenth aspect further includes a water level sensor that detects a water level in the drain receiver, and a controller, in which the controller controls timing of discharging the water stored in the drain receiver from the drain receiver based on a detection result input from the water level sensor. In this case, the water stored in the drain receiver is discharged from the drain receiver at an appropriate timing even if a work person such as an operator does not perform an operation of discharging the water stored in the drain receiver from the drain receiver.

In the seventeenth aspect, the construction machine according to any one of the seventh to tenth aspects may further include the following configuration. That is, in the construction machine according to the seventeenth aspect, the drain pipe may include an upstream portion extending from the device drain port to the drain receiver and a downstream portion extending from the drain receiver to the pipe drain port, and the drain receiver may be disposed above the machine body frame and configured to receive water guided by the upstream portion.

In the eighteenth aspect, the construction machine according to any one of the first to seventeenth aspects may further include the following configuration. That is, the construction machine according to the eighteenth aspect may include a lower travelling body, an upper slewing body supported by the lower travelling body so as to be swingable with respect to the lower travelling body about a slewing axis extending vertically, and a swivel joint disposed on the slewing axis, and the swivel joint may have a guide path for receiving water guided by the drain pipe and guiding the water downward. In the eighteenth aspect, since the water guided by the drain pipe is guided downward through the guide path of the swivel joint disposed on the slewing axis, the frequency of occurrence of troubles such as grime and corrosion caused by water splashing on a structure such as a crawler travelling device is reduced.

In the nineteenth aspect, the construction machine according to any one of the first to seventeenth aspects may further include the following configuration. That is, the construction machine according to the nineteenth aspect may include a lower travelling body, an upper slewing body supported by the lower travelling body so as to be swingable with respect to the lower travelling body about a slewing axis extending vertically, and a swivel joint disposed on the slewing axis, in which the drain pipe has a portion extending downward along an outer surface of the swivel joint, and a pipe drain port may be formed in the portion. In the nineteenth aspect, since the water guided by the drain pipe is guided downward through a part of the drain pipe extending downward along the outer surface of the swivel joint disposed on the slewing axis and is discharged from the pipe drain port formed in the part, the frequency of occurrence of troubles such as grime and corrosion caused by water splashing on the structure such as the crawler travelling device is reduced.

In the twentieth aspect, the construction machine according to any one of the first to nineteenth aspects may further include the following configuration. That is, the construction machine according to the twentieth aspect may include a lower travelling body having a car body, an upper slewing body supported by the lower travelling body so as to be swingable with respect to the lower travelling body about a slewing axis extending vertically, and a lower drain receiver supported by the car body and receiving water guided by the drain pipe. In the twentieth aspect, the water guided by the drain pipe can be received by the lower drain receiver supported by the car body of the lower travelling body, so that the water is prevented from scattering to the car body and structures around the car body. In the twentieth aspect, the lower drain receiver may be disposed at a position to receive water discharged from a pipe drain port of the drain pipe, or may be disposed in the middle of the drain pipe. Further, in the twentieth aspect, the lower drain receiver preferably has a shape (for example, an annular shape) surrounding the slewing axis. In this case, regardless of the slewing angle of the upper slewing body with respect to the lower travelling body, the lower drain receiver can receive the water guided by the drain pipe.

In the twenty-first aspect, the construction machine according to the twentieth aspect preferably further includes the following configuration. That is, in the construction machine according to the twenty-first aspect, the lower drain receiver preferably includes a lower storage portion that is a storage portion capable of storing water, and a lower receiver drain port capable of discharging the water stored in the lower storage portion. In the twenty-first aspect, water can be temporarily stored in the lower storage portion, and the stored water can be drained from the lower receiver drain port. In the twenty-first aspect, the construction machine may further include a water level sensor that detects a water level in the lower receiver drain port, and a controller, in which the controller may perform control for notifying a work person of information regarding the water level based on a detection result input from the water level sensor. The controller may control timing of discharging the water stored in the lower drain receiver from the lower drain receiver based on a detection result input from the water level sensor.

In the twenty-second aspect, the construction machine according to any one of the first to twenty-first aspects may further include the following configuration. That is, the construction machine according to the twenty-second aspect may include a lower travelling body, an upper slewing body supported by the lower travelling body so as to be swingable with respect to the lower travelling body about a slewing axis extending vertically, and a water vapor drain port for discharging water vapor contained in water guided by the drain pipe, in which the upper slewing body may include an outer wall defining a machine chamber, an exhaust port for discharging air inside the machine chamber may be formed in the outer wall, and the water vapor drain port may discharge water vapor in a direction along a discharge direction of air discharged from the exhaust port. In the twenty-second aspect, since the water vapor drain port discharges the water vapor in the direction along the discharge direction of the air discharged from the exhaust port, the discharged water vapor easily moves away from the construction machine. As a result, the discharged water vapor is suppressed from entering the inside of the construction machine again. In the twenty-second aspect, the exhaust port and the water vapor drain port are preferably formed in the same side portion of any one of the right side portion, the left side portion, the rear side portion, and the front side portion of the construction machine. According to the twenty-second aspect, in a case where a heat exchanger is disposed in the machine chamber, a temperature of air discharged from the exhaust port is higher than an outside air temperature. In this case, since the water vapor discharged from the water vapor drain port is mixed with the high-temperature air discharged from the exhaust port, the condensation of the water vapor is suppressed, and thus, for example, the frequency of the occurrence of the visibility defect caused by the condensation of the water vapor in winter can be reduced.

In the twenty-third aspect, the construction machine according to any one of the first to twenty-second aspects may further include the following configuration. That is, the construction machine according to the twenty-third aspect may include a lower travelling body, an upper slewing body supported by the lower travelling body so as to be swingable with respect to the lower travelling body about a slewing axis extending vertically, and a water vapor drain port for discharging water vapor contained in water guided by the drain pipe, in which the upper slewing body may include an outer wall defining a machine chamber, an intake port for sucking air outside the machine chamber into the machine chamber may be formed in the outer wall, and a guide plate for guiding water vapor so that a discharge direction of the water vapor discharged from the water vapor drain port becomes a direction away from the intake port may be disposed in the water vapor drain port. In the twenty-third aspect, since the water vapor discharged from the water vapor drain port is guided by the guide plate in a direction away from the intake port, the discharged water vapor is suppressed from entering the machine chamber again through the intake port.

In the twenty-fourth aspect, the construction machine according to any one of the first to twenty-third aspects may further include the following configuration. That is, the construction machine according to the twenty-fourth aspect may include a lower travelling body, an upper slewing body supported by the lower travelling body so as to be swingable with respect to the lower travelling body about a slewing axis extending vertically, and a water vapor drain port for discharging water vapor contained in water guided by the drain pipe, in which the upper slewing body may include an outer wall defining a machine chamber, an intake port for sucking air outside the machine chamber into the machine chamber may be formed in the outer wall, and the water vapor drain port and the intake port may be formed at positions where the machine chamber is interposed therebetween. In the twenty-fourth aspect, since the water vapor drain port and the intake port are formed at positions where the machine chamber is interposed therebetween, the water vapor discharged from the water vapor drain port is suppressed from entering the machine chamber again through the intake port.

## Claims

1. A construction machine comprising:
a fuel cell device having a device drain port; and
a drain pipe connected to the device drain port,
wherein the drain pipe is disposed at a position lower than or equal to a height of the device drain port.

2. The construction machine according to claim 1, wherein the drain pipe has a pipe drain port, and the pipe drain port is positioned below the device drain port.

3. The construction machine according to claim 2, wherein the pipe drain port is formed at a lowermost portion of the drain pipe.

4. The construction machine according to claim 2 or 3, further comprising a machine body frame positioned below the fuel cell device,
wherein the drain pipe extends toward an opening formed in the machine body frame, and the pipe drain port is disposed in the opening or disposed below the opening.

5. The construction machine according to claim 4, wherein
the machine body frame includes a structural member and a non-structural member, and
the opening is formed in the non-structural member, or formed between the structural member and the non-structural member.

6. The construction machine according to claim 5, wherein the drain pipe has a downward portion which is a portion extending downward at a position avoiding the structural member.

7. The construction machine according to any one of claims 1 to 6, further comprising a drain receiver that receives water guided by the drain pipe.

8. The construction machine according to claim 7, wherein the drain receiver includes a storage portion capable of storing water, and a receiver drain port capable of discharging the water stored in the storage portion.

9. The construction machine according to claim 8, wherein the drain receiver further includes a water vapor drain port for discharging water vapor.

10. The construction machine according to claim 9, wherein the receiver drain port is formed in a lower portion of the drain receiver, and the water vapor drain port is formed in a side portion of the drain receiver.

11. The construction machine according to any one of claims 7 to 10, further comprising a machine body frame positioned below the fuel cell device,
wherein the drain receiver is disposed below the machine body frame and configured to receive water discharged from the pipe drain port.

12. The construction machine according to any one of claims 7 to 11, further comprising a machine body frame positioned below the fuel cell device,
wherein the drain receiver is disposed below the machine body frame,
the drain pipe includes a downstream lateral portion which is a portion extending laterally between the machine body frame and a bottom surface of the drain receiver, and
the pipe drain port is formed at a distal end portion of the downstream lateral portion.

13. The construction machine according to claim 12, wherein the drain pipe has a drain hole in a portion upstream of the pipe drain port on a lower surface of the downstream lateral portion.

14. The construction machine according to claim 9 or 10, further comprising a duct into which water vapor discharged from the water vapor drain port flows.

15. The construction machine according to any one of claims 7 to 14, further comprising:
a water level sensor that detects a water level in the drain receiver; and
a controller,
wherein the controller performs control for notifying a work person of information regarding the water level based on a detection result input from the water level sensor.

16. The construction machine according to any one of claims 7 to 15, further comprising:
a water level sensor that detects a water level in the drain receiver; and
a controller,
wherein the controller controls timing of discharging the water stored in the drain receiver from the drain receiver based on a detection result input from the water level sensor.

17. The construction machine according to any one of claims 7 to 10, further comprising a machine body frame positioned below the fuel cell device,
wherein the drain pipe includes an upstream portion extending from the device drain port to the drain receiver and a downstream portion extending from the drain receiver to the pipe drain port, and
the drain receiver is disposed above the machine body frame and configured to receive water guided by the upstream portion.

18. The construction machine according to any one of claims 1 to 17, comprising:
a lower travelling body;
an upper slewing body supported by the lower travelling body so as to be swingable with respect to the lower travelling body about a slewing axis extending vertically; and
a swivel joint disposed on the slewing axis,
wherein the swivel joint has a guide path for receiving water guided by the drain pipe and guiding the water downward.

19. The construction machine according to any one of claims 1 to 17, comprising:
a lower travelling body;
an upper slewing body supported by the lower travelling body so as to be swingable with respect to the lower travelling body about a slewing axis extending vertically; and
a swivel joint disposed on the slewing axis,
wherein the drain pipe has a portion extending downward along an outer surface of the swivel joint, and a pipe drain port is formed in the portion.

20. The construction machine according to any one of claims 1 to 19, comprising:
a lower travelling body having a car body;
an upper slewing body supported by the lower travelling body so as to be swingable with respect to the lower travelling body about a slewing axis extending vertically; and
a lower drain receiver supported by the car body and receiving water guided by the drain pipe.

21. The construction machine according to claim 20, wherein the lower drain receiver includes a lower storage portion that is a storage portion capable of storing water, and a lower receiver drain port capable of discharging the water stored in the lower storage portion.

22. The construction machine according to any one of claims 1 to 21, comprising:
a lower travelling body;
an upper slewing body supported by the lower travelling body so as to be swingable with respect to the lower travelling body about a slewing axis extending vertically; and
a water vapor drain port for discharging water vapor contained in water guided by the drain pipe,
wherein the upper slewing body includes an outer wall defining a machine chamber,
an exhaust port for discharging air inside the machine chamber is formed in the outer wall, and
the water vapor drain port is configured to discharge water vapor in a direction along a discharge direction of air discharged from the exhaust port.

23. The construction machine according to any one of claims 1 to 22, comprising:
a lower travelling body;
an upper slewing body supported by the lower travelling body so as to be swingable with respect to the lower travelling body about a slewing axis extending vertically; and
a water vapor drain port for discharging water vapor contained in water guided by the drain pipe,
wherein the upper slewing body includes an outer wall defining a machine chamber,
an intake port for sucking air outside the machine chamber into the machine chamber is formed in the outer wall, and
a guide plate for guiding water vapor so that a discharge direction of the water vapor discharged from the water vapor drain port becomes a direction away from the intake port is disposed in the water vapor drain port.

24. The construction machine according to any one of claims 1 to 23, comprising:
a lower travelling body;
an upper slewing body supported by the lower travelling body so as to be swingable with respect to the lower travelling body about a slewing axis extending vertically; and
a water vapor drain port for discharging water vapor contained in water guided by the drain pipe,
wherein the upper slewing body includes an outer wall defining a machine chamber,
an intake port for sucking air outside the machine chamber into the machine chamber is formed in the outer wall, and
the water vapor drain port and the intake port are formed at positions where the machine chamber is interposed therebetween.
